# FASCICULE DE BREVET EUROPEEN

(11) **EP 4 177 017 B1**
(45) Date de publication et mention de la délivrance du brevet: **27.03.2024**
(21) Numéro de dépôt: 22204810.0
(22) Date de dépôt: 31.10.2022
(51) Int. Cl.: B25J 15/00, B25J 15/02, B25J 9/08, B25J 9/10, B25J 15/10, B25J 15/06

(54) **PREHENSEUR**
GREIFER
GRIPPER

(30) Priorité: 04.11.2021 FR 2111736
(43) Date de publication de la demande: 10.05.2023
(60) Demande divisionnaire: 24155368.4
(73) Titulaire: Commissariat à l'énergie atomique et aux énergies alternatives, 75015 Paris (FR)
(72) Inventeur: KFOURY, Fares, 91191 GIF SUR YVETTE CEDEX (FR); GROSSARD, Mathieu, 91191 GIF SUR YVETTE CEDEX (FR)
(74) Mandataire: Brevalex

(56) Documents cités:
- WO-A1-2017/025076
- WO-A1-2019/075464
- CN-A- 107 053 224
- CN-A- 110 802 622
- JP-A- S62 295 840
- JP-A- 2014 076 522
- US-A1- 2019 184 580

## Description

La présente invention concerne le domaine de la manutention et plus particulièrement le domaine de la préhension.

### ARRIERE PLAN DE L'INVENTION

Classiquement un préhenseur comprend une pince comportant un bâti sur lequel une extrémité proximale d'un doigt actionné est articulée. L'extrémité distale du doigt comprend un mors généralement pourvu d'une surface antidérapante. Le doigt est généralement rectiligne ou courbe. Une telle pince est particulièrement adaptée à la saisie d'objets de géométrie similaire et idéalement prédéfinie. Une telle pince manque de polyvalence, particulièrement pour la saisie d'objets spéciaux comme des objets de grandes dimensions, plans, ou présentant une portion cylindrique ou conique. Il est alors nécessaire de changer la pince pour un outil adapté à de tels objets spéciaux.

L'art antérieur CN 107 053 224 A divulgue un préhenseur similaire.

Afin d'améliorer la polyvalence d'un préhenseur, il a été envisagé de réaliser une pince comprenant deux phalanges articulées l'une à l'autre. Un tel préhenseur comprend généralement un doigt composé d'une première phalange distale et une deuxième phalange proximale articulée sur un bâti et articulées entre elles pour permettre une rotation de la première phalange relativement à la deuxième phalange de manière à ce que le doigt puisse passer d'une configuration d'ouverture vers une configuration de serrage. Un premier actionneur contrôle le mouvement de la première phalange et un deuxième actionneur contrôle le mouvement de la deuxième phalange. Les moteurs et les réducteurs associés des actionneurs sont généralement rapportés sur le bâti et la transmission est portée par les phalanges. Le contrôle de l'effort de serrage appliqué par un tel doigt requiert d'instrumenter l'ensemble des actionneurs et des articulations. Une telle instrumentation est lourde, couteuse et la dérive cumulée de l'ensemble des instruments de mesure ajoutée aux frottements de la transmission ne permet pas une précision du contrôle du serrage du préhenseur adaptée à la manutention d'objets délicats. Enfin, l'inertie d'un tel préhenseur est également préjudiciable à la précision du contrôle de l'effort de serrage.

### OBJET DE L'INVENTION

L'invention a notamment pour but d'améliorer la précision du contrôle d'un effort de serrage d'un préhenseur à doigts.

### RESUME DE L'INVENTION

A cet effet, on prévoit, un préhenseur comportant un bâti et un doigt actionné, le doigt comprenant une première phalange distale et une deuxième phalange proximale qui est articulée sur le bâti autour d'un premier axe, la première phalange et la deuxième phalange étant reliées mécaniquement pour permettre une rotation de la première phalange autour d'un deuxième axe sensiblement parallèle au premier axe de manière à ce que le doigt puisse passer d'une configuration d'ouverture vers une configuration de serrage lorsque la première phalange et/ou la deuxième phalange effectue une rotation dans un premier sens relativement au bâti. Selon l'invention, la deuxième phalange comprend une première barre comprenant une première extrémité reliée à la première phalange et une deuxième extrémité montée à pivotement sur le bâti autour du premier axe. La deuxième phalange comprend également un actionneur linéaire comprenant une troisième extrémité reliée à la première phalange et une quatrième extrémité montée à pivotement sur le bâti, la première barre et l'actionneur linéaire étant agencés pour former un premier quadrilatère déformable dans lequel une distance séparant la troisième extrémité de la quatrième extrémité peut être modifiée.

Cette différence par rapport aux quadrilatères déformables connus dans de telles applications dans lesquels la distance qui sépare les points d'articulation des barres est fixe contribue à l'obtention d'un préhenseur plus léger et dans lequel la transmission de mouvement à la première phalange présente une inertie réduite du préhenseur. Le préhenseur de l'invention est plus transparent et possède une réversibilité améliorée de l'actionnement qui permet un retour fidèle et un contrôle en effort par mesure directe du courant moteur. La présence d'un capteur d'effort au niveau de l'actionneur devient inutile.

La polyvalence du préhenseur est améliorée lorsque le doigt comprend une troisième phalange reliant la première phalange et la deuxième phalange.

La compacité du préhenseur est améliorée lorsque la troisième phalange comprend une deuxième barre comprenant une cinquième extrémité articulée sur la première phalange et une sixième extrémité articulée sur une première bielle, la troisième phalange comprenant également une troisième barre comprenant une septième extrémité articulée sur la première phalange et une huitième extrémité articulée sur la première bielle, la première extrémité et la troisième extrémité étant articulée à la première bielle.

La compacité du préhenseur est encore améliorée lorsqu'un projeté orthogonal de la troisième extrémité sur une droite reliant la première extrémité et la huitième extrémité appartient à un segment reliant la première extrémité et la huitième extrémité.

On améliore encore la compacité du préhenseur lorsque la première extrémité est articulée sur la sixième extrémité.

Avantageusement, la deuxième phalange comprend un premier organe de rappel du doigt vers la configuration d'ouverture et/ou la troisième phalange comprend un deuxième organe de rappel du doigt vers la configuration d'ouverture. On obtient une réalisation économique lorsque l'organe de rappel comprend un élément élastique.

La masse du préhenseur et son inertie sont améliorées lorsque l'actionneur linéaire comprend un vérin à vis, préférentiellement un vérin comprenant une vis à billes.

On réduit l'hyperstaticité du mécanisme lorsque l'actionneur linéaire est relié au doigt et/ou au châssis par une liaison de type pivot glissant à glissement limité de troisième axe sensiblement parallèle au premier axe.

La précision du préhenseur est améliorée lorsque le préhenseur comprend au moins un codeur rotatif.

La polyvalence du préhenseur est améliorée lorsque le doigt comprend un élément d'adhésion commandable.

Une amélioration sensible de la polyvalence du préhenseur est obtenue lorsque l'élément d'adhésion est agencé pour exercer un effort de prise selon une direction sensiblement orthogonale au premier axe.

Avantageusement, l'élément d'adhésion est solidaire de la première phalange.

Le préhenseur permet la manutention d'objets non préhensibles- tels que des objets plans- lorsque le préhenseur comprend une première butée pour limiter une première course angulaire d'une première rotation de la première phalange autour du deuxième axe dans un deuxième sens opposé au premier sens. Optionnellement, la première course angulaire comprend un premier secteur angulaire strictement positif selon le deuxième sens et mesuré depuis un premier plan comprenant le premier axe et le deuxième axe.

Le secteur angulaire est avantageusement compris entre dix et quatre-vingt-dix degrés, préférentiellement compris entre vingt et soixante degrés.

Avantageusement encore, le préhenseur comprend un troisième organe de rappel de la première phalange pour exercer un troisième effort de rappel qui amène la première phalange depuis une position située dans le premier secteur angulaire vers une position amenant à la configuration d'ouverture du doigt.

Le préhenseur est aisément adaptable lorsque le troisième organe de rappel comprend des moyens de réglage d'une position de sur-ouverture de la première phalange à partir de laquelle le troisième effort de rappel est exercé.

Une conception simple est obtenue lorsque le troisième organe de rappel comprend un ressort et que les moyens de réglage de la position de sur-ouverture comprennent un câble de longueur réglable relié à une extrémité du ressort.

L'invention concerne également un dispositif de préhension qui comprend une pluralité de préhenseurs du type décrit ci-dessus ou d'un type déjà connu.

Selon d'autres modes de réalisation particuliers, non exclusifs et optionnels de l'invention :
- la pluralité de préhenseurs comprend un premier préhenseur, un deuxième préhenseur et un troisième préhenseur ;
- le premier préhenseur et le deuxième préhenseur sont respectivement portés par une première platine et une deuxième platine montées à coulissement relativement au châssis selon deux sens opposés d'une première direction ;

- les mouvements de coulissement de la première platine et de la deuxième platine sont actionnés à l'aide d'un premier dispositif d'actionnement pourvu d'un unique deuxième actionneur.
- le deuxième actionneur est un actionneur rotatif et/ou la première platine comprend un deuxième ensemble vis/écrou et/ou la deuxième platine comprend un troisième ensemble vis/écrou.
- le premier dispositif d'actionnement comprend un premier pignon d'entrainement d'un premier organe de transmission d'un effort d'entrainement ;
- le premier préhenseur comprenant un premier doigt actionné, le deuxième préhenseur comprenant un deuxième doigt actionné, le premier doigt actionné est articulé relativement à la première platine autour d'un cinquième axe et le deuxième doigt actionné est articulé relativement à la deuxième platine autour d'un sixième axe, le cinquième axe et le sixième axe étant sensiblement orthogonaux au premier axe ;
- une rotation du premier doigt relativement au bâti autour du cinquième axe (O5) et une rotation du deuxième doigt (123) autour du sixième axe (O6) sont actionnées à l'aide d'un deuxième dispositif d'actionnement.
- le deuxième dispositif d'actionnement est pourvu d'un unique troisième actionneur ;
- le deuxième dispositif d'actionnement est agencé de manière à ce qu'un mouvement de coulissement de la première platine et/ou la deuxième platine soit découplé d'un mouvement de rotation du premier doigt actionné et du deuxième doigt actionné et réciproquement ;
- le deuxième dispositif d'actionnement est agencé pour que les mouvements de rotation du premier doigt et du deuxième doigt s'effectuent dans des sens de rotation opposés ;
- le troisième actionneur est un actionneur rotatif solidaire de la première platine ;
- le deuxième dispositif d'actionnement comprend un deuxième pignon d'entrainement d'un deuxième organe de transmission d'un effort d'entrainement ;
- le deuxième organe de transmission formant une boucle fermée, le deuxième dispositif d'actionnement comprend un premier renvoi de deuxième organe de transmission et un deuxième organe de renvoi de deuxième organe de transmission, le premier renvoi et le deuxième renvoi étant solidaires du châssis.
- le deuxième organe de transmission est une courroie crantée sur ses deux faces ;
- la pluralité de préhenseurs comprend un quatrième préhenseur ;
- le troisième préhenseur et le quatrième préhenseur sont respectivement portés par une troisième platine et une quatrième platine montées à coulissement relativement au châssis selon deux sens opposés d'une deuxième direction sensiblement parallèle à la première direction ;
- les mouvements de coulissement de la troisième platine et de la quatrième platine sont actionnés à l'aide d'un troisième dispositif d'actionnement pourvu d'un unique quatrième actionneur ;
- le quatrième actionneur est un actionneur rotatif et/ou la troisième platine comprend un quatrième ensemble vis/écrou et/ou la quatrième platine comprend un cinquième ensemble vis/écrou et/ou le troisième dispositif d'actionnement comprend un troisième pignon d'entrainement d'un troisième organe de transmission d'un effort d'entrainement ;
- le troisième préhenseur comprenant un troisième doigt actionné et le quatrième préhenseur comprenant un quatrième doigt actionné, le troisième doigt actionné est articulé relativement à la troisième platine autour d'un septième axe et le quatrième doigt actionné est articulé relativement à la quatrième platine autour d'un huitième axe, le septième axe et le huitième axe étant sensiblement orthogonaux au premier axe ;
- une rotation du troisième doigt relativement au bâti autour du septième axe et une rotation du quatrième doigt autour du huitième axe sont actionnées à l'aide d'un quatrième dispositif d'actionnement agencé pour que les mouvements de rotation du troisième doigt et du quatrième doigt s'effectuent dans des sens de rotation opposés ;
- le quatrième dispositif d'actionnement est agencé de manière à ce qu'un mouvement de coulissement de la troisième platine et/ou la quatrième platine soit découplé d'un mouvement de rotation du troisième doigt actionné et du quatrième doigt actionné et réciproquement ;
- un dispositif d'accouplement du quatrième dispositif d'actionnement avec le deuxième dispositif d'actionnement agencé de manière à ce que le troisième dispositif d'actionnement soit entraîné par le troisième actionneur ;
- le dispositif d'accouplement comprend un premier galet monté à rotation sur la première platine ou la deuxième platine autour d'un neuvième axe et qui est entraîné par le deuxième dispositif d'actionnement, un deuxième galet monté à rotation sur la troisième platine ou la quatrième platine autour d'un dixième axe et qui entraine le troisième dispositif d'actionnement, un dispositif de transmission de mouvement transmettant une rotation du premier galet au deuxième galet ;
- le dispositif d'accouplement comprend un bras articulé comprenant un premier segment de bras et un deuxième segment de bras articulés entre eux autour d'un onzième axe, le premier segment de bras étant articulé autour du neuvième axe et le deuxième segment de bras étant articulé autour du dixième axe, le bras articulé comprenant un troisième galet de renvoi d'un élément de transmission du dispositif de transmission.

D'autres caractéristiques et avantages de l'invention ressortiront à la lecture de la description qui suit d'un mode de réalisation particulier/ d'une mise en oeuvre particulière et non limitatif/limitative de l'invention.

### BREVE DESCRIPTION DES DESSINS

Il sera fait référence aux dessins annexés, parmi lesquels :
[Fig. 1] la figure 1 est une représentation schématique en plan d'un préhenseur selon un premier mode de réalisation de l'invention ;
[Fig. 2] la figure 2 est une représentation schématique du préhenseur de la figure 1 dans une première phase de serrage;
[Fig. 3] la figure 3 est une représentation schématique du préhenseur de la figure 1 dans une deuxième phase de serrage;
[Fig. 4] la figure 4 est une représentation schématique du préhenseur de la figure 1 dans une troisième phase de serrage;
[Fig. 5] la figure 5 est une représentation schématique en plan d'un préhenseur selon un deuxième mode de réalisation de l'invention dans une configuration de serrage ;
[Fig. 6] la figure 6 est une représentation schématique du préhenseur de la figure 5 dans une première phase de saisie plane;
[Fig. 7] la figure 7 est une représentation schématique du préhenseur de la figure 5 dans une deuxième phase de saisie plane;
[Fig. 8] la figure 8 est une représentation schématique du préhenseur de la figure 5 dans une troisième phase de saisie plane;
[Fig. 9] la figure 9 est une représentation schématique du préhenseur de la figure 5 dans une quatrième phase de saisie plane;
[Fig. 10] la figure 10 est une représentation schématique en perspective d'un dispositif de préhension selon un troisième mode de réalisation de l'invention ;
[Fig. 11] la figure 11 est une représentation schématique partielle en perspective du mode de réalisation de la figure 10 selon un premier angle de vue ;
[Fig. 12] la figure 12 est une représentation schématique partielle en perspective du mode de réalisation de la figure 10 selon un deuxième angle de vue;
[Fig. 13] la figure 13 est une représentation schématique partielle en vue de dessous du mode de réalisation de la figure 10 dans un état rétracté;
[Fig. 14] la figure 14 est une représentation schématique partielle en vue de dessous du mode de réalisation de la figure 10 dans un état déployé;
[Fig. 15] la figure 15 est une représentation schématique partielle d'un dispositif de préhension selon un quatrième mode de réalisation de l'invention;
[Fig. 16] la figure 16 est une représentation schématique partielle d'un dispositif de préhension selon un cinquième mode de réalisation de l'invention ;
[Fig. 17] la figure 17 est une représentation schématique d'un dispositif de préhension selon un sixième mode de réalisation de l'invention ;
[Fig. 18] la figure 18 est une représentation schématique partielle en perspective du mode de réalisation de la figure 17 selon un premier angle de vue ;
[Fig. 19] la figure 19 est une représentation schématique partielle en vue de dessous du mode de réalisation de la figure 17;
[Fig. 20] la figure 20 est une représentation schématique partielle en perspective du mode de réalisation de la figure 17;
[Fig. 21] la figure 21 est une représentation schématique partielle épurée de la figure 20;
[Fig. 22] la figure 22 est une représentation schématique partielle en perspective de différentes configurations du préhenseur selon le mode de réalisation de la figure 17 ;
[Fig. 23] la figure 23 est une représentation schématique partielle en perspective des différentes configurations de la figure 22, les flasques ayant été représentées;
[Fig. 24] la figure 24 est une représentation schématique partielle en perspective des différentes configurations du dispositif de préhension de l'invention.

### DESCRIPTION DETAILLEE DE L'INVENTION

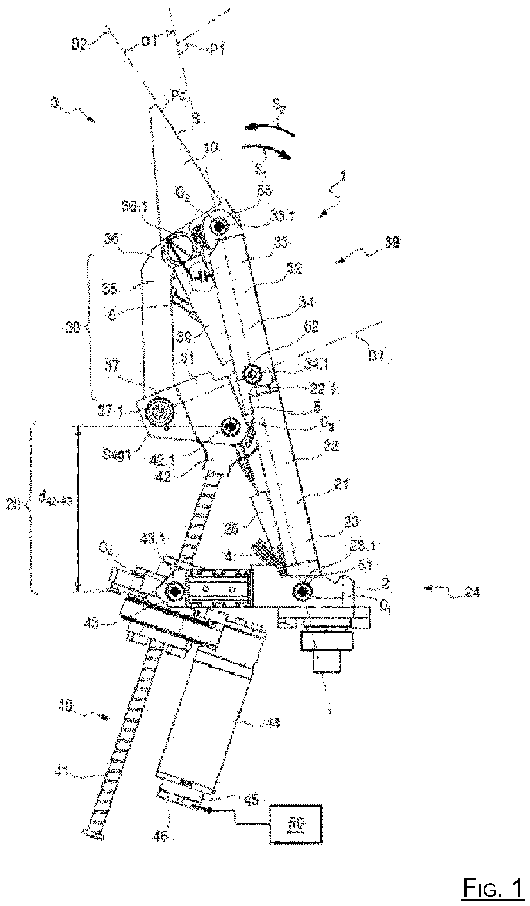

En référence aux figures 1 à 4, et selon un premier mode de réalisation, le préhenseur selon l'invention, et généralement désigné 1, comporte un bâti 2 et un doigt 3 actionné. Le doigt 3 comprend une première phalange 10 distale et une deuxième phalange 20 proximale articulée sur le bâti 2 autour d'un premier axe 01. Ici, la phalange 10 et la phalange 20 sont reliées mécaniquement par une troisième phalange 30 pour permettre une rotation de la phalange 10 autour d'un deuxième axe O2 sensiblement parallèle au premier axe 01.

La phalange 20 comprend une première barre 21 comportant une première extrémité 22 reliée de manière pivotante en un premier point 22.1 de pivot à la phalange 10 par l'intermédiaire d'une bielle 31 de la phalange 30. La barre 21 comprend également une deuxième extrémité 23 articulée sur le bâti 2 autour de l'axe O1 en un deuxième point 23.1 de pivot. La phalange 20 comprend également un premier actionneur linéaire - ici un vérin 40 comprenant un premier ensemble écrou/ vis à billes 41 - comprenant une troisième extrémité 42 reliée en un troisième point 42.1 de pivot de manière pivotante à la bielle 31 et une quatrième extrémité 43 montée à pivotement sur le bâti 2 en un quatrième point 43.1 de pivot. Le vérin 40 comprend un premier motoréducteur 44 pourvu d'un premier codeur rotatif 45 et d'un capteur de courant 46. Le motoréducteur 44, le codeur 45 et le capteur 46 sont reliés à une unité de contrôle et de commande 50.

Comme il apparaît sur la figure 1, la barre 21 et le vérin 40 sont agencés pour former un premier quadrilatère 24 déformable dans lequel une distance d42-43 séparant l'extrémité 42 de l'extrémité 43 peut être modifiée.

Ainsi, le premier quadrilatère 24 déformable comprend le bâti 2, la bielle 31, la barre 21 et l'actionneur 40 qui fait office de dernière barre de longueur modifiable du quadrilatère 24.

Ici, les points de pivot 42.1 et 43.1 reliant le vérin 40 respectivement au doigt 3 et au bâti 2 réalisent chacun une liaison de type pivot glissant à glissement limité selon respectivement un troisième axe O3 et un quatrième axe O4 sensiblement parallèles au premier axe O1. Le glissement selon le troisième axe O3 et le quatrième axe O4 est dit limité en ce que l'amplitude du glissement est limitée par des butées (non représentées).

La phalange 30 comprend une deuxième barre 32 comprenant une cinquième extrémité 33 articulée sur la phalange 10 en un cinquième point 33.1 de pivot et une sixième extrémité 34 articulée sur la bielle 31 en un sixième point 34.1 de pivot confondu avec le point 22.1. La phalange 30 comprend également une troisième barre 35 comprenant une septième extrémité 36 articulée en un septième point 36.1 de pivot sur la phalange 10 et une huitième extrémité 37 articulée en un huitième point 37.1 de pivot sur la bielle 31. La bielle 31, la phalange 10, la deuxième barre 32 et la troisième barre 35 forment un deuxième quadrilatère 38 déformable.

Comme visible en figure 1, un projeté orthogonal de la troisième extrémité 42 sur une première droite D1 reliant la première extrémité 22 et la huitième extrémité 37 appartient à un segment Seg1 reliant la première extrémité 22 et la huitième extrémité 37.

La deuxième phalange 20 comprend un premier ressort 25 de traction qui s'étend entre le point 23.1 et le point 42.1 pour réduire la longueur de l'une des diagonales du quadrilatère 24, à savoir la distance séparant le point 23.1 du point 42.1 vers la configuration d'ouverture.

Le bâti 2 comprend une butée 4 contre laquelle la barre 21 est amenée en appui sous l'effet du vérin 40 lorsque ce dernier commande un mouvement d'ouverture du doigt 3. La butée 4 limite ainsi l'amplitude de la rotation de la barre 21 autour de l'axe O1 dans un deuxième sens S2 opposé au premier sens S1.

La troisième phalange 30 comprend un deuxième ressort 39 de traction qui s'étend entre le point 22.1 et le point 36.1 pour réduire la longueur de l'une des diagonales du quadrilatère 38, à savoir la distance séparant le point 22.1 du point 36.1.

La barre 32 comprend une butée 5 qui vient en saillie de l'extrémité 34. La butée 5 est amenée en appui contre la barre 21 sous l'effet du ressort 25. La butée 5 limite ainsi l'amplitude de la rotation de la barre 32 autour du point 34.1 dans le deuxième sens S2 vers la configuration d'ouverture.

La phalange 10 comprend une butée 6 qui est amenée en appui contre la barre 32 sous l'effet du ressort 39. La butée 6 limite ainsi l'amplitude de la rotation de la phalange 10 autour de l'axe O2 dans le deuxième sens S2. Ici, la butée 6 bloque la rotation de la phalange 10 autour de l'axe O2 lorsque la phalange 10 est positionnée de manière à ce qu'un angle α1 mesuré entre un premier plan P1 comprenant l'axe O1 et l'axe O2 et une deuxième droite D2 orthogonale à l'axe O2 et qui passe par un point de contact Pc de la phalange 10-dans le cas d'une phalange 10 présentant une surface de contact S plane, le point de contact est un point quelconque de la surface plane S- soit égal à dix degrés.

Enfin, les points de pivot 22.1, 23.1, 33.1 comprennent respectivement un deuxième codeur rotatif 51, un troisième codeur rotatif 52 et un quatrième codeur rotatif 53 reliés à l'unité 50.

Le fonctionnement du préhenseur 1 va être décrit en application au serrage d'un objet 60 (ici de forme cylindrique) et en référence aux figures 1 à 4.

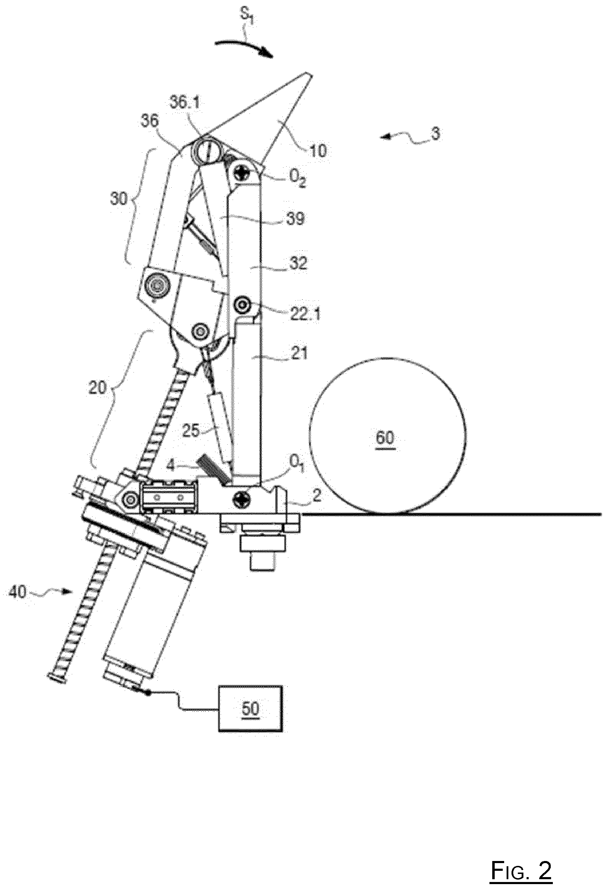

Selon une première étape, l'unité 50 commande le vérin 40 de manière à faire passer le doigt 3 dans une configuration d'ouverture représentée en figure 1. Pour ce faire, l'unité 50 peut, en fonction du pas de la vis 41, commander une rétraction de la vis 41. Le doigt 3 adopte alors sa configuration d'ouverture sous l'effet de l'actionneur 40 et des ressorts 25 et 39 qui amènent respectivement la barre 21, la barre 32 et la phalange 10 au contact des butées 4, 5 et 6. Une fois un objet 60 présenté au préhenseur 1, et selon une deuxième étape, l'unité 50 commande le vérin 40 de manière à déployer la vis 41 - c'est-à-dire de manière à augmenter la distance séparant les points 23.1 et 42.1. Le doigt 3 effectue alors une rotation autour du premier axe O1 dans un premier sens S1. Sous l'action des ressorts 25 et 39 qui maintiennent, la barre 32 et la phalange 10 respectivement au contact des butées 5 et 6, la rotation du doigt 3 consiste en une rotation de la barre 21 autour de l'axe O1, les autres éléments du doigt 3 demeurant immobiles relativement à la barre 21. En particulier, les phalanges 10 et 30 sont immobiles l'une par rapport à l'autre ainsi que relativement à la barre 21. Une fois que la barre 21 de la phalange 20 vient au contact de l'objet 60, le déploiement de la vis 41 provoque une rotation de la phalange 30 relativement à la phalange 20 autour du point 22.1 (figure 2) dans le sens S1. Soumise à l'action du ressort 39, la phalange 10 est maintenue contre la butée 6 et demeure immobile relativement à la phalange 30.

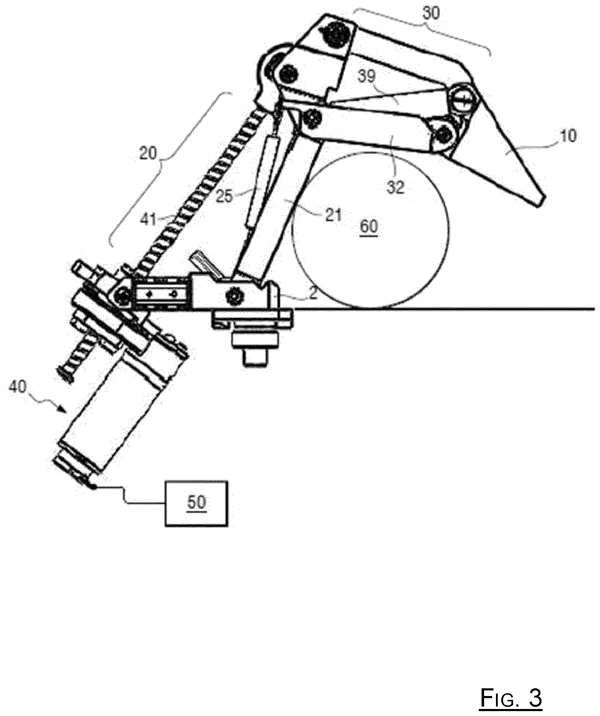

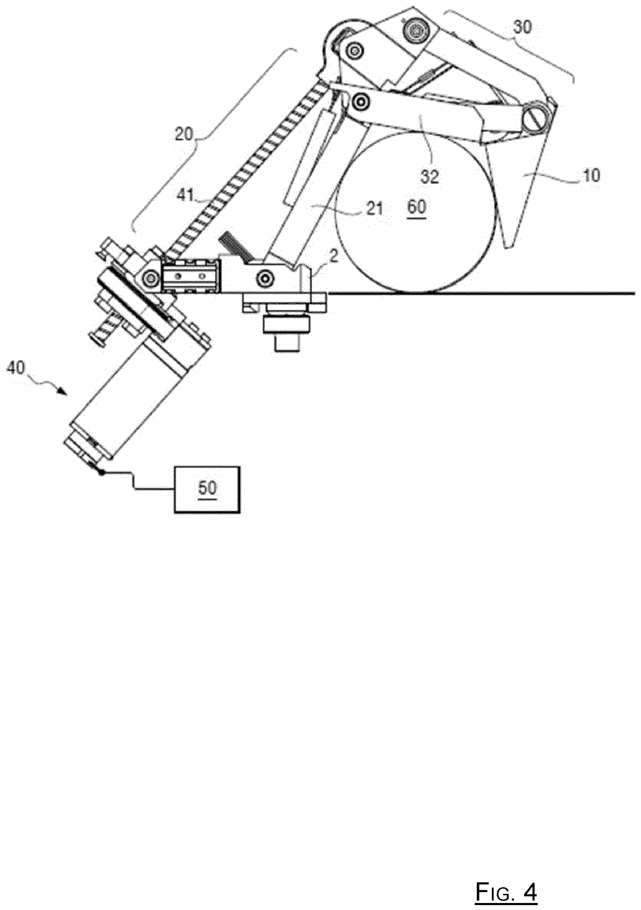

La poursuite du déploiement de la vis 41 entraîne la venue de la barre 32 de la phalange 30 au contact de l'objet 60 (figure 3). Selon une troisième étape, la rotation de la phalange 30 étant bloquée, la phalange 10 entame une rotation dans le sens S1 autour de l'axe O2 jusqu'à venir au contact de l'objet 60 (figure 4). L'unité de commande 50, sur la base des informations en provenance des codeurs 45, 51, 52 et 53 ainsi que du capteur de courant 46 détermine les positions des phalanges 10, 20 et 30, l'effort appliqué en extrémité de la vis 41 et calcule un effort de serrage appliqué par chacune des phalanges 10, 20, 30 du doigt 3 sur l'objet 60. Il est ainsi possible de définir et maîtriser un effort de serrage maximal à appliquer sur l'objet 60. L'ouverture du préhenseur 1 se fait en commandant une rétraction de la vis 41. L'ouverture du préhenseur 1 suit l'ordre inverse des étapes de serrage.

Les éléments identiques ou analogues à ceux précédemment décrits porteront une référence numérique identique à celle-ci dans la description qui suit de deux autres modes de réalisation de l'invention.

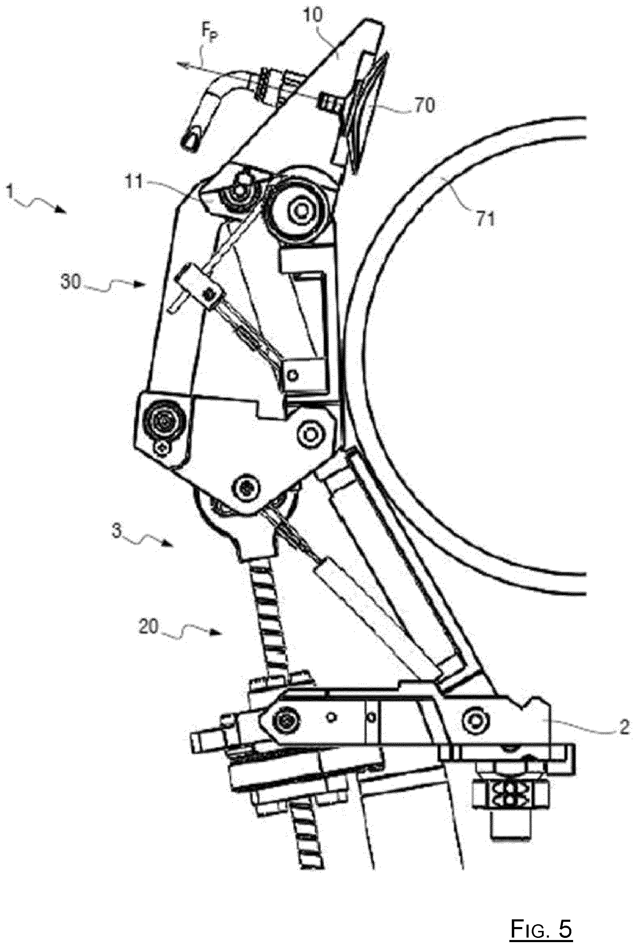

Selon un deuxième mode de réalisation représenté sur les figures 5 à 7, la phalange 10 comprend une ventouse pneumatique 70 agencée pour exercer un effort de prise Fp selon une direction sensiblement orthogonale au premier axe. La ventouse 70 est reliée à une pompe à vide (non représentée) reliée à l'unité 50.

La phalange 10 comprend, ici, une butée 11 qui coopère avec une surface 26 de la barre 32 pour limiter une première course angulaire C1 d'une première rotation de la phalange 10 autour de l'axe O2 dans le deuxième sens S2. Ici, la course angulaire C1 comprend un premier secteur angulaire Sa1 strictement positif selon le deuxième sens et mesuré depuis le plan P1. Le secteur angulaire Sa1 mesure, ici, soixante degrés.

Le doigt 3 comprend également un troisième ressort de torsion 12 qui s'étend autour d'un arbre 13 de liaison en rotation de la phalange 10 à la phalange 30. Le ressort 12 comprend un fil 14 dont une extrémité 14.1 est reliée à la première extrémité 15.1 d'un câble 15. La deuxième extrémité 15.2 du câble 15 est reliée à la phalange 20. La longueur du câble 15 est réglable à l'aide d'un serre-câble 16. Le fil 14 vient en appui contre une surface 17 de la phalange 10 pour exercer un troisième effort de rappel qui amène la phalange 10 depuis une position située dans le premier secteur angulaire Sa1 vers une position amenant à la configuration d'ouverture du doigt 3 représentée en figure 1. La longueur du câble 15 permet de régler une position de sur-ouverture de la phalange 10 à partir de laquelle le troisième effort de rappel est exercé. En d'autres termes, la butée 6 rigide du premier mode de réalisation est remplacée par une butée élastique réalisée par le fil 14. La butée 11 est, ici, une première butée.

La figure 5 illustre une utilisation du préhenseur 1 selon le deuxième mode de réalisation pour la préhension d'un objet cylindrique 71 dont une demi-circonférence est supérieure à une longueur du doigt 3.

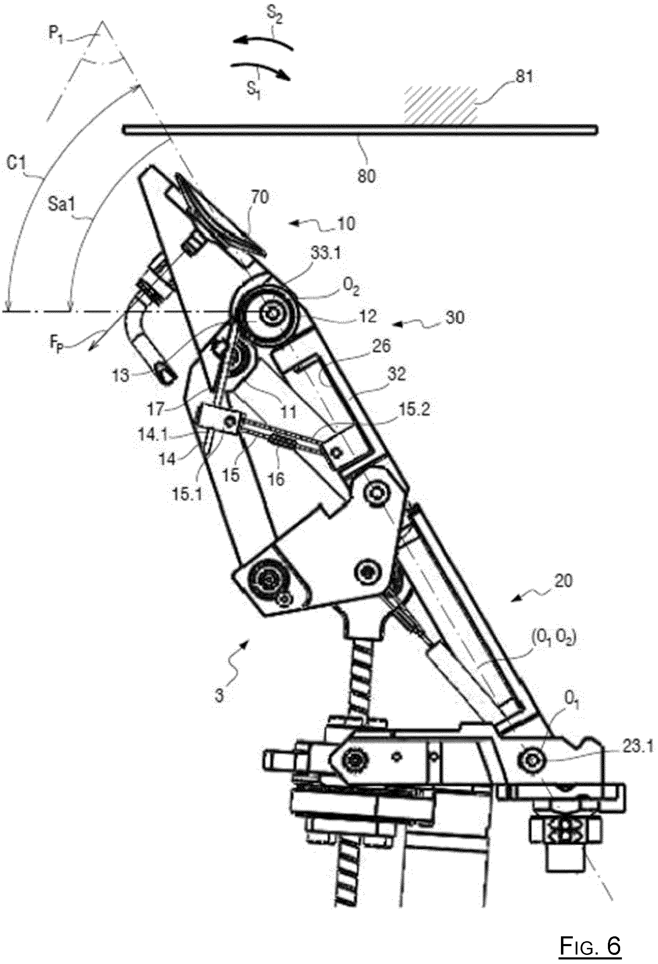

Une utilisation particulière du préhenseur 1 selon le deuxième mode de réalisation est décrite en lien avec la préhension d'un deuxième objet plan 80 qui repose sur un appui 81 et en référence aux figures 6 à 9.

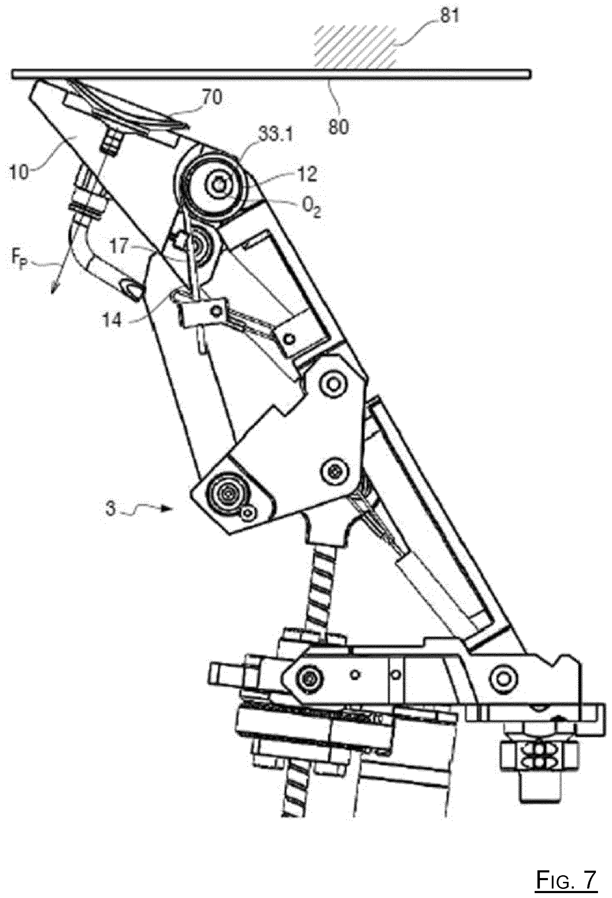

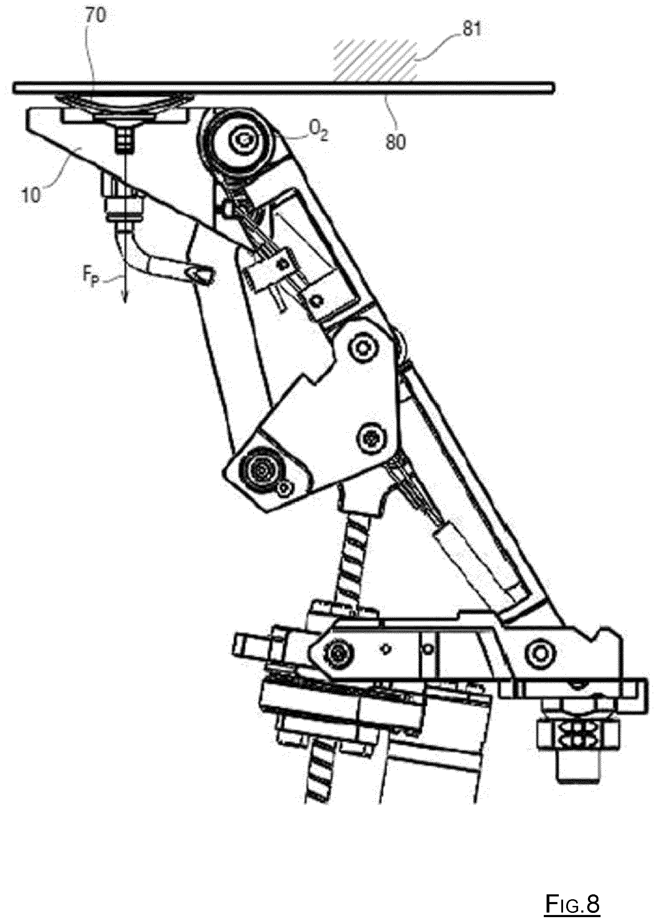

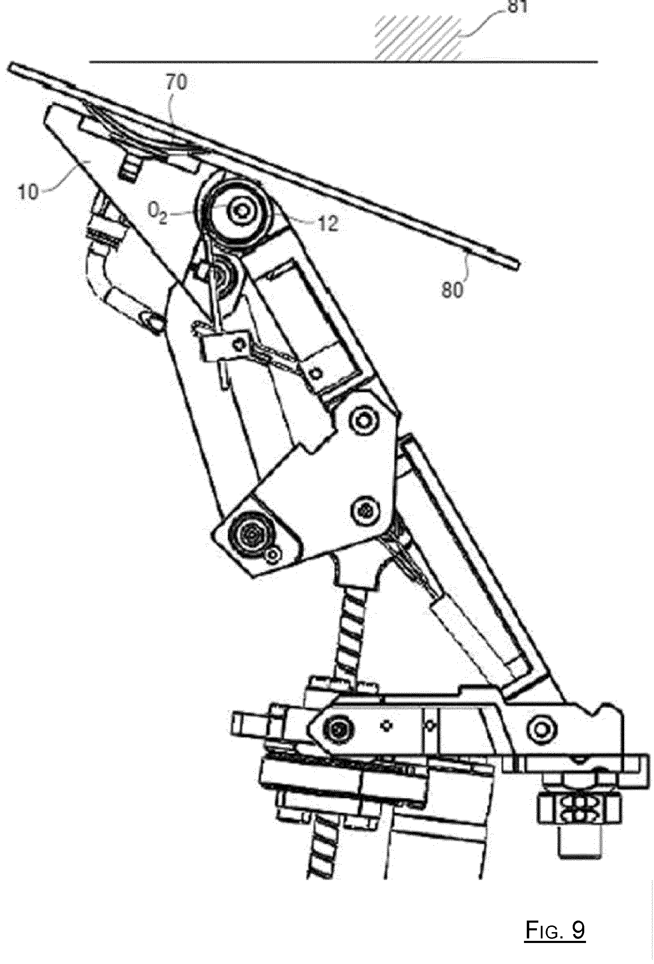

Selon une première étape, le doigt 3 est placé en configuration d'ouverture et la phalange 10 est approchée de l'objet 80. Une extrémité de la phalange 10 entre en contact avec l'objet 80. Selon une deuxième étape représentée en figure 7, on commande une approche du préhenseur 1 de l'objet 80 qui provoque une rotation de la phalange 10 autour du point 33.1 selon le sens S2. La surface 17 de la phalange 10 est alors en appui sur le fil 14 et comprime le ressort 12. Selon une troisième étape représentée en figure 8, le mouvement d'approche du préhenseur 1 se poursuit jusqu'à ce que la phalange 10 adopte une position dans laquelle la ventouse 70 est appliquée sur l'objet 80. Selon une troisième étape, l'unité 50 commande la ventouse 70 pour qu'elle exerce un effort de prise sur l'objet 80. Selon une quatrième étape représentée en figure 9, on commande un éloignement du préhenseur 1 de l'appui 81. L'objet 80 est maintenu solidaire de la phalange 10 par la ventouse 70. Au fur et à mesure de l'éloignement du préhenseur 1 de l'appui 81, la phalange 10 effectue une rotation autour de l'axe O2 dans le sens S1 sous l'effet du ressort 12.

Un tel préhenseur 1 permet de saisir des objets plans de grande dimension et des objets de taille plus réduite par serrage.

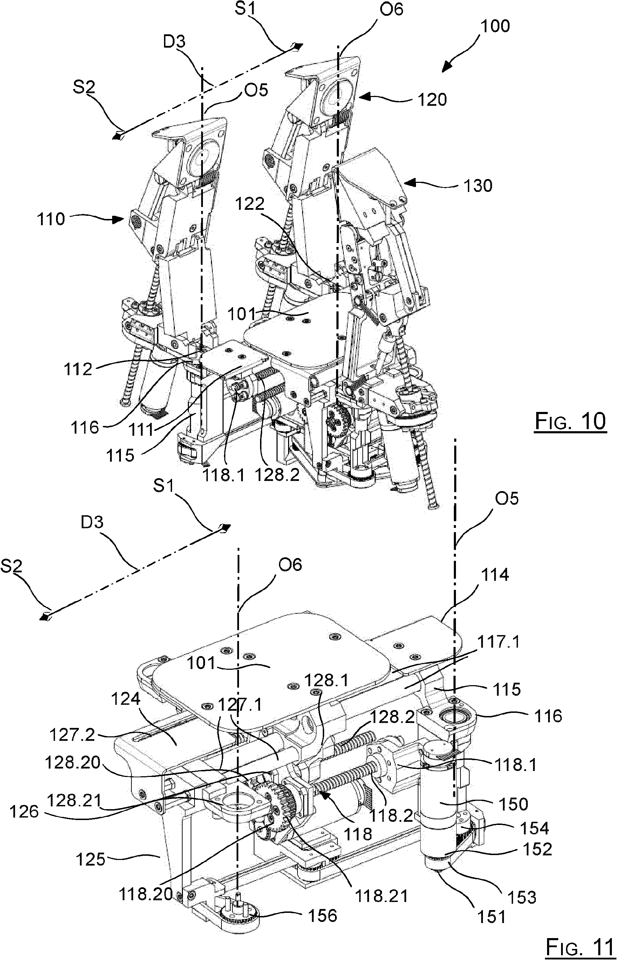

Selon un troisième mode de réalisation représenté en figures 10 à 14, un dispositif de préhension 100 comprend un premier préhenseur 110, un deuxième préhenseur 120 et un troisième préhenseur 130 dont les doigts respectifs 113, 123 et 133 sont reliés à un même châssis 101. Le premier bâti 112 du préhenseur 110 et le deuxième bâti 122 du préhenseur 120 sont respectivement portés par une première platine 111 et une deuxième platine 121 montées à coulissement selon une première direction D3 relativement au châssis 101. Le troisième bâti 131 du troisième préhenseur 130 est quant à lui monté fixe sur le châssis 101.

La première platine 111 comprend une première plateforme 114 en saillie de laquelle vient un premier pied 115 pourvu d'une première bride 116 équipée d'un palier non représenté qui accueille à rotation le bâti 112 autour d'un cinquième axe O5, ici sensiblement vertical selon les représentations des figures 10 et 11. La première platine 111 comprend également, de manière connue en elle-même, deux premiers arbres 117.1 de guidage en translation de la platine 111 relativement au châssis 101. La platine 111 comprend également un deuxième écrou 118.1 d'un deuxième ensemble vis/écrou 118 dont la deuxième vis 118.2 est montée à rotation relativement au châssis 101 et bloquée en translation relativement au châssis 101. Une extrémité 118.20 de la vis 118.2 comprend une première roue dentée 118.21 d'entrainement de la vis 118.2.

De manière similaire, la deuxième platine 121 comprend une deuxième plateforme 124 en saillie de laquelle vient un deuxième pied 125 pourvu d'une deuxième bride 126 équipée d'un palier non représenté qui accueille à rotation le bâti 122 autour d'un sixième axe O6, ici sensiblement vertical selon les représentations des figures 10 et 11. La deuxième platine 121 comprend également, de manière connue en elle-même, deux deuxièmes arbres 127.1 et une lumière 127.2 de guidage en translation de la platine 121 relativement au châssis 101. La platine 121 comprend également un troisième écrou 128.1 d'un troisième ensemble vis/écrou 128 dont la troisième vis 128.2 est montée à rotation relativement au châssis 101 et bloquée en translation relativement au châssis 101. Une extrémité 128.20 de la vis 128.2 comprend une première roue crantée 128.21 d'entrainement de la vis 128.2 ainsi qu'une deuxième roue dentée 128.22 solidaire en rotation de la vis 128.2 et qui engrène avec la première roue dentée 118.21.

Le châssis 101 comprend également un deuxième motoréducteur électrique 102 dont l'arbre de sortie 103 est pourvu d'un premier pignon 104 qui collabore avec une première courroie crantée 105. La courroie crantée 105 lie en rotation le premier pignon 104 et la roue crantée 128.21. Ainsi, une rotation du pignon 104 dans un premier sens de rotation provoque la rotation de la roue dentée 128.21-et donc une rotation de la vis 128.2- dans le même premier sens de rotation. Le train d'engrenage composé des roues dentées 128.22 et 118.21 transmet la rotation de la vis 128.2 à la vis 118.2 dans un deuxième sens de rotation inverse du premier sens de rotation de la deuxième vis 118.2. Préférentiellement, les roues dentées 128.22 et 118.21 possèdent un nombre de dents identique.

Ainsi, les mouvements de coulissement de la première platine 111 et de la deuxième platine 121 sont actionnés à l'aide d'un unique motoréducteur 102 de manière à ce que la première platine coulisse dans un premier sens S1 de la direction D3 qui est opposé au deuxième sens S2 de coulissement de la deuxième platine 121.

Les ensembles vis/écrou 118 et 128, les roues dentées 118.21 et 128.22, le motoréducteur 102, le pignon 104, la roue crantée 128.21 et la courroie 105 constitue un premier dispositif d'actionnement 106.

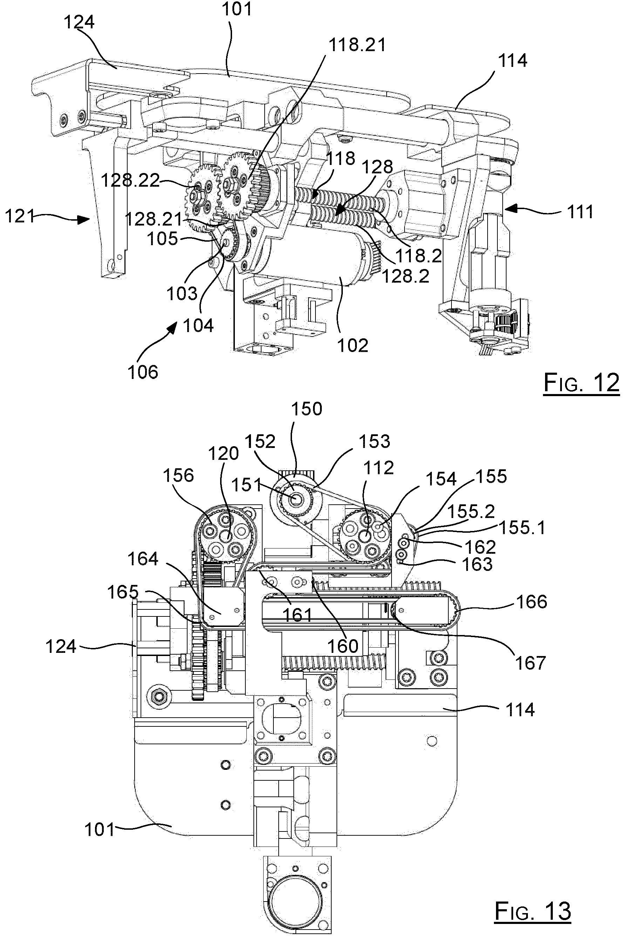

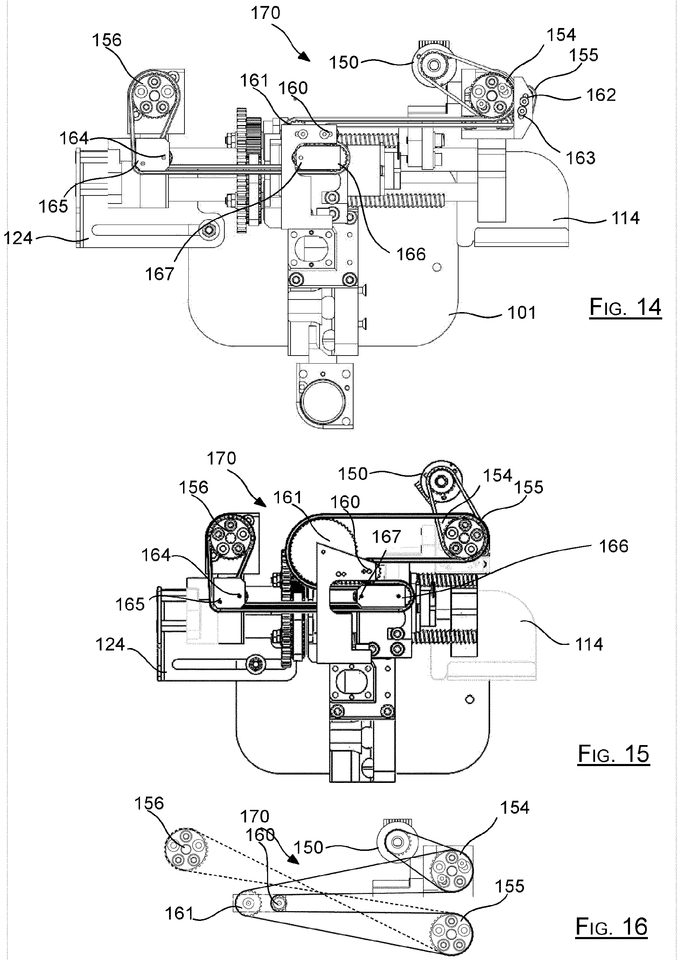

Comme visible en figures 13 et 14, la rotation du premier doigt 113 relativement au châssis 101 autour de l'axe O5 et la rotation du deuxième doigt 123 autour de l'axe O6 sont actionnées à l'aide d'un unique troisième motoréducteur 150 dont la sortie 151 comprend un deuxième pignon cranté 152 qui met en mouvement une deuxième courroie crantée 153 qui forme une boucle fermée. Le motoréducteur 150 est solidaire de la platine 111.

Comme visible en figure 14, la deuxième courroie crantée 153 coopère avec une deuxième roue crantée 154 solidaire en rotation du bâti 112 du premier préhenseur 110. La roue crantée 154 coopère également avec une troisième courroie 155 crantée sur sa face extérieure 155.1 et sur sa face intérieure 155.2. La courroie 155 coopère également avec une troisième roue crantée 156 solidaire en rotation du bâti 122 du deuxième préhenseur 120.

Le châssis 101 comprend un premier renvoi 160 et un deuxième renvoi 161 de la courroie 155. Le premier renvoi 160 est, ici, un renvoi cranté monté à rotation relativement au châssis 101 et qui coopère avec la face extérieure 155.1 de la courroie 155. Le deuxième renvoi 161 est, ici, un renvoi cranté monté à rotation relativement au châssis 101 et qui coopère avec une face intérieure 155.2 de la courroie 155.

Des renvois annexes 162 et 163 reliés à la première platine 111 viennent plaquer la face extérieure 155.1 de la courroie 155 sur la roue crantée 154 en collaborant respectivement avec la face intérieure 155.2 de la courroie 155 et la face extérieure 155.1 de la courroie 155.

Des renvois annexes 164 et 165 supplémentaires reliés à la platine 121 viennent plaquer la face intérieure 155.2 de la courroie 155 sur la roue crantée 156 en collaborant respectivement avec la face extérieure 155.1 de la courroie 155 et la face intérieure 155.2 de la courroie 155. Enfin des renvois annexes 166 et 167 également reliés à la platine 121viennent plaquer la courroie sur les renvois 160 et 161 en collaborant respectivement avec la face extérieure 155.1 de la courroie 155 et la face intérieure 155.2 de la courroie 155. Les renvois 162 à 167 contribuent notamment à une meilleure compacité du dispositif de préhension 100 et à un alignement des préhenseurs 110 et 120 sur une droite sensiblement parallèle à la direction D1.

Le motoréducteur 150, la courroie 155, les roues crantées 154 et 156 ainsi que les renvois 160 à 167 constituent un deuxième dispositif d'actionnement 170 agencé de manière à ce qu'un mouvement de coulissement de la platine 111 et/ou de la platine 121 soit découplé d'un mouvement de rotation du premier doigt 113 et du deuxième doigt 123 provoqué par l'énergisation du motoréducteur 150. Réciproquement, un mouvement de rotation du premier doigt 113 et du deuxième doigt 123 provoqué par une énergisation du motoréducteur 150 est découplé d'un mouvement de coulissement de la platine 111 et/ou de la platine 121. En effet, le deuxième dispositif d'actionnement 170 maintient une longueur constante de courroie 155 entre les roues 154 et 156. Ceci ressort notamment de l'examen des figures 14 et 15.

Les figures 15 et 16 illustrent d'autres configurations du deuxième dispositif d'actionnement 170 permettant d'obtenir les mêmes effets de découplage des mouvements de rotation des doigts 113 et 123 avec les mouvements de translation des platines 111 et 121.

Selon un quatrième mode de réalisation représenté en figure 15, le dispositif d'actionnement 170 est dépourvu des renvois annexes 162 et 163 et la courroie crantée 155 est une courroie crantée intérieurement. Un dispositif connu d'inversion de sens de rotation (par exemple un train d'engrenage) non représenté est interposé entre la roue 156 et le doigt 123.

Selon un cinquième mode de réalisation représenté en figure 16, le dispositif d'actionnement 170 est dépourvu des renvois annexes 162 à 167 et la courroie crantée 155 est une courroie crantée intérieurement. L'inversion de sens de rotation de la roue crantée 156 par rapport à la roue 154 est réalisé par le croisement des brins d'une courroie de transmission additionnelle 157 crantée intérieurement.

Les éléments identiques ou analogues à ceux décrits précédemment pour les quatrième et cinquième modes de réalisation porteront une référence numérique identique à celle-ci augmentée d'une centaine dans la description qui suit d'un sixième mode de réalisation de l'invention.

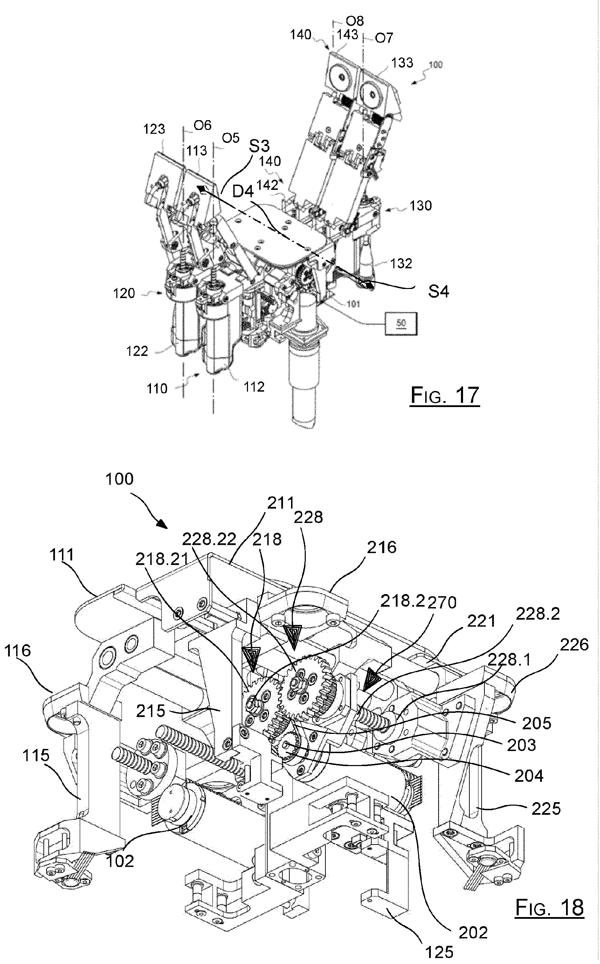

En référence aux figures 17 à 23, et selon le sixième mode de réalisation, le dispositif de préhension 100 comprend un quatrième préhenseur 140 pourvu d'un quatrième doigt 143. Le préhenseur 130 et le préhenseur 140 sont respectivement portés par une troisième platine 211 et une quatrième platine 221 montées à coulissement relativement au châssis 101 selon une deuxième direction D4 sensiblement parallèle à la direction D3. Le bâti 132 du préhenseur 130 est accueilli à rotation selon un septième axe O7 vertical dans une troisième bride 216 du troisième pied 215 de la platine 211. Le bâti 142 du préhenseur 140 est accueilli à rotation selon un huitième axe O8 vertical dans une quatrième bride 226 du quatrième pied 225 de la platine 221.

Les mouvements de coulissement de la platine 211 et de la platine 221 sont actionnés à l'aide d'un troisième dispositif d'actionnement 206 similaire au premier dispositif d'actionnement 106 et qui est pourvu d'un unique quatrième motoréducteur électrique 202. L'arbre de sortie 203 du motoréducteur 202 est pourvu d'un troisième pignon 204 qui collabore avec une quatrième courroie crantée 205. La courroie crantée 205 entraine en rotation une quatrième vis 218.2 d'un quatrième ensemble vis/écrou 218. La quatrième vis 218.2 est reliée au châssis 101 et le quatrième écrou du quatrième ensemble vis/écrou 218 est solidaire de la platine 211. La rotation de la vis 218.2 est transmise à une cinquième vis 228.2 d'un cinquième ensemble vis/écrou 228. La vis 228.2 est reliée au châssis 101 et le cinquième écrou 228.1 de l'ensemble vis/écrou 228 est solidaire de la platine 221. La transmission de la rotation de la quatrième vis 218.2 à la cinquième vis 228.2 est réalisée à l'aide d'un engrenage comprenant une troisième roue dentée 228.22 et une quatrième roue dentée 228.21.

Ainsi, une rotation du pignon 204 dans un premier sens de rotation provoque une translation de la platine 211 dans un sens S3 de la direction D3 et une translation de la platine 221 dans un sens S4 opposé au sens S3.

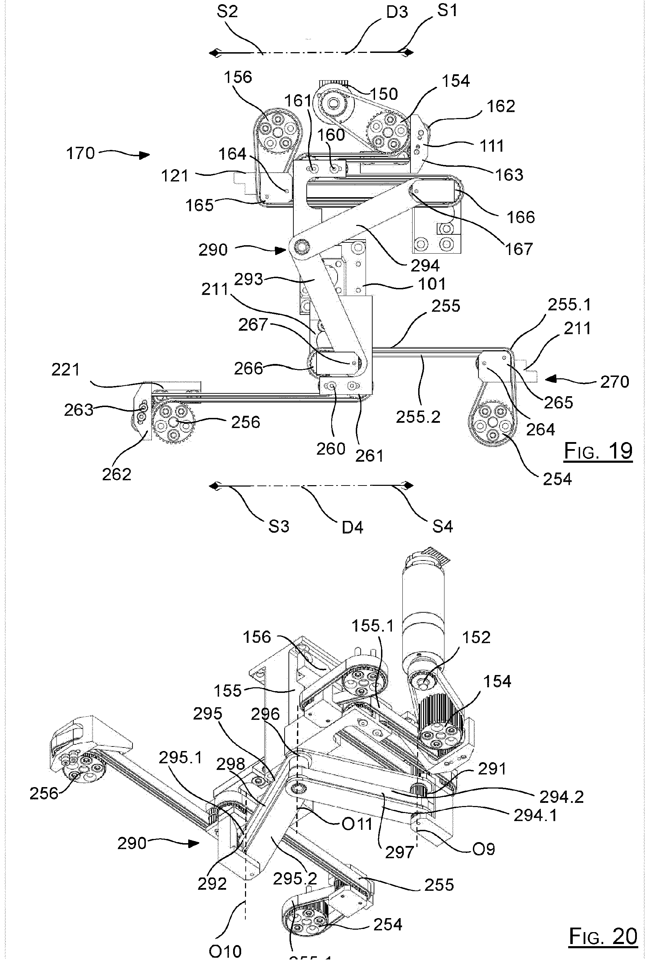

En référence à la figure 20, la rotation du troisième doigt 133 relativement au châssis 101 autour de l'axe O7 et la rotation du quatrième doigt 143 autour de l'axe O8 sont actionnées à l'aide d'un quatrième dispositif d'actionnement 270 identique au dispositif d'actionnement 170 à l'exception notable du fait qu'il est dépourvu de motoréducteur. Ainsi, le dispositif d'actionnement 270 comprend une cinquième courroie crantée 255 qui forme une boucle fermée et qui coopère avec une quatrième roue crantée 254 solidaire en rotation du bâti 132 du troisième préhenseur 130. La courroie 255 est crantée sur sa face extérieure 255.1 et sur sa face intérieure 255.2. La courroie 255 coopère également avec une cinquième roue crantée 256 solidaire en rotation du bâti 142 du quatrième préhenseur 140.

Le châssis 101 comprend également un troisième renvoi 260 et un quatrième renvoi 261 de la courroie 255. Le troisième renvoi 260 est, ici, un renvoi cranté monté à rotation relativement au châssis 101 et qui coopère avec la face extérieure 255.1 de la courroie 255. Le quatrième renvoi 261 est, ici, un renvoi cranté monté à rotation relativement au châssis 101 et qui coopère avec une face intérieure 255.2 de la courroie 255.

Des renvois annexes 264 et 265 reliés à la troisième platine 211 viennent plaquer la face intérieure 255.2 de la courroie 255 sur la roue crantée 254 en collaborant respectivement avec la face extérieure 255.1 de la courroie 255 et la face intérieure 255.2 de la courroie 255.

Des renvois annexes 262 et 263 supplémentaires reliés à la platine 221 viennent plaquer la face extérieure 255.1 de la courroie 255 sur la roue crantée 256 en collaborant respectivement avec la face intérieure 255.2 de la courroie 255 et la face extérieure 255.1 de la courroie 255. Enfin des renvois annexes 266 et 267 également reliés à la platine 211 viennent plaquer la courroie sur les renvois 260 et 261 en collaborant respectivement avec la face intérieure 255.2 de la courroie 255 et la face extérieure 255.1 de la courroie 255. Les renvois 262 à 267 contribuent notamment à une meilleure compacité du dispositif de préhension 100 et à un alignement des préhenseurs 130 et 140 sur une droite sensiblement parallèle à la direction D4. Ainsi, le dispositif d'actionnement 270 est agencé de manière à ce qu'un mouvement de coulissement de la troisième platine 211 et/ou la quatrième platine 221 soit découplé d'un mouvement de rotation du troisième doigt actionné 133 et du quatrième doigt actionné 143. Réciproquement, un mouvement de rotation du troisième doigt actionné 133 et du quatrième doigt actionné 143 est découplé d'un mouvement de coulissement de la troisième platine 211 et/ou de la quatrième platine 221.

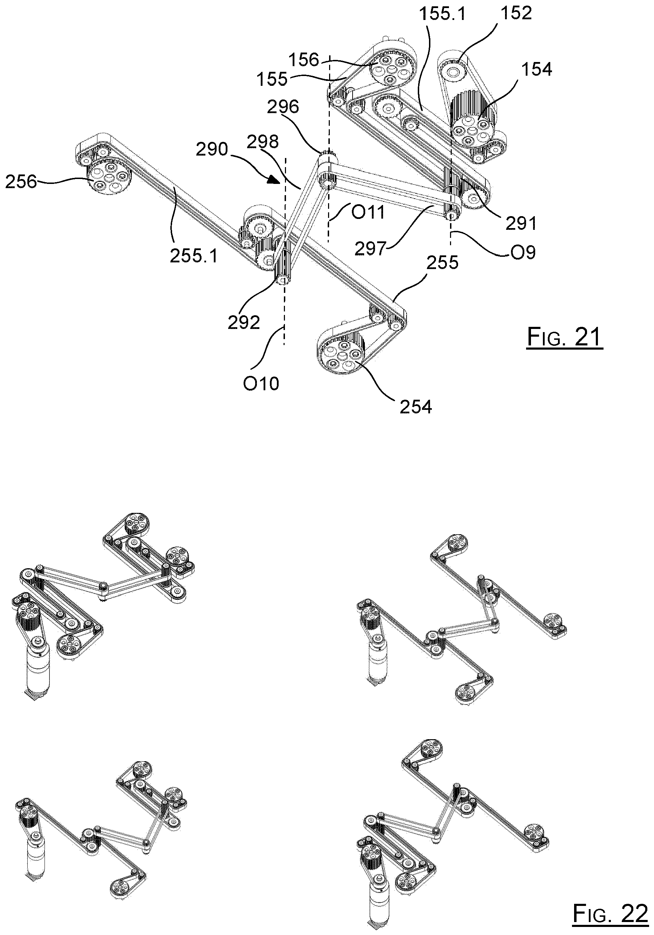

Comme visible en figures 21 et 22, un dispositif d'accouplement 290 relie le deuxième dispositif d'actionnement 170 avec le quatrième dispositif d'actionnement 270 de manière à ce que le quatrième dispositif d'actionnement 270 soit entraîné par le motoréducteur 150.

A cette fin, le dispositif d'accouplement 290 comprend un premier galet cranté 291 monté à rotation sur la deuxième platine 121 autour d'un neuvième axe O9 sensiblement vertical et qui collabore avec la face extérieure 155.1 de la courroie 155 pour être entraîné par cette dernière. Plus précisément, le premier galet cranté 291 est solidaire en rotation du renvoi 167 qui est lui-même entraîné en rotation par la face extérieure 155.1 de courroie 155. Le dispositif d'accouplement 290 comprend également un deuxième galet cranté 292 monté à rotation sur la troisième platine 211 autour d'un dixième axe O10 vertical et qui collabore avec la face extérieure 255.1 de la courroie 255 pour entraîner cette dernière. Plus précisément, le deuxième galet cranté 292 est solidaire en rotation du renvoi 267 qui collabore avec la face extérieure 255.1 de la courroie 255.

Le dispositif d'accouplement 290 comprend également un bras 293 articulé comprenant un premier segment de bras 294 et un deuxième segment de bras 295 articulés entre eux autour d'un onzième axe O11. Un troisième galet cranté 296 est monté à rotation autour de l'axe O11. Le premier segment 294 comprend deux flasques 294.1 et 294.2 qui s'étendent parallèlement pour relier l'axe O11 et l'axe O9 autour duquel elles sont articulées. Le deuxième segment 295 comprend deux flasques 295.1 et 295.2 qui s'étendent parallèlement pour relier l'axe O11 et l'axe O10 autour duquel elles sont articulées. Une sixième courroie crantée 297 s'étend entre le galet 291 et le galet 296. Une septième courroie crantée 298 s'étend entre le galet 296 et le galet 292. Le galet 296, les courroies 297 et 298 ainsi que les flasque 295.1 et 295.2 constituent un dispositif de transmission de mouvement 299 transmettant une rotation du premier galet 291 au deuxième galet 292.

Le dispositif d'accouplement 290 transmet ainsi une rotation du premier galet 291 provoqué par le motoréducteur 150 au deuxième galet 292 qui actionne ainsi la rotation des roues 254 et 256, provoquant une rotation en sens opposés des doigts 133 et 143. Les trois points d'articulations du bras 293 ainsi que le galet 296 permettent de maintenir l'accouplement des deux dispositifs d'actionnement 170 et 270 quelque soient les positions relatives de ceux-ci, tout en maintenant un désaccouplement entre les mouvements de translation et de rotation des doigts 113, 123, 133 et 143.

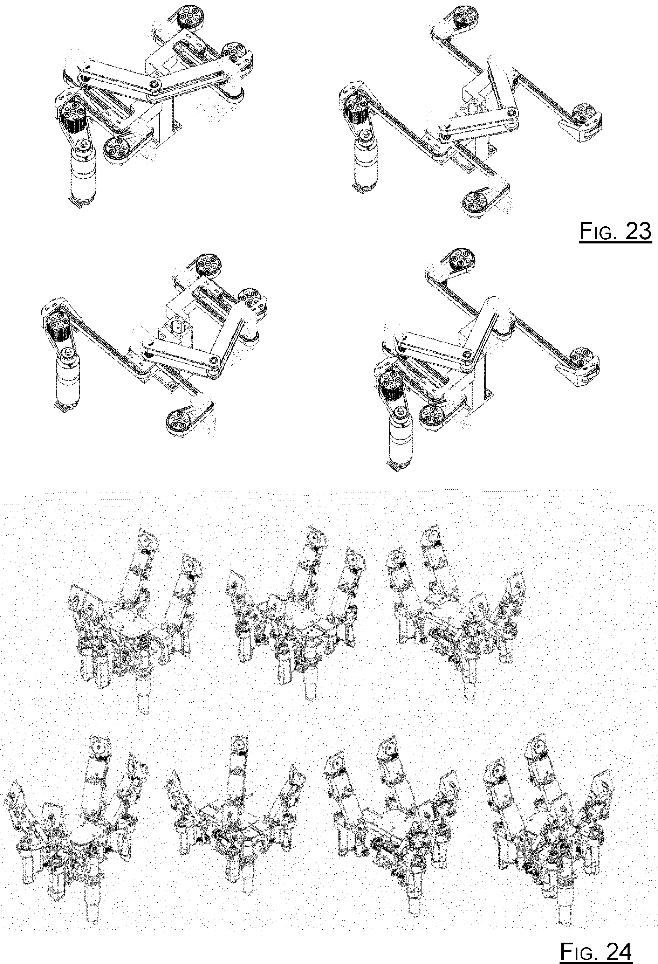

La disposition relative des doigts 113, 123, 133 et 143 relativement au bâti peut alors adopter une pluralité de configurations représentées en figure 24 ce qui apporte une grande polyvalence au dispositif 100.

Bien entendu, l'invention n'est pas limitée au mode de réalisation décrit mais englobe toute variante entrant dans le champ de l'invention telle que définie par les revendications.

En particulier,
- bien qu'ici le préhenseur comprenne un doigt unique, l'invention s'applique également à un préhenseur comprenant un doigt et un obstacle fixe ;
- bien qu'ici le dispositif de préhension comprenne quatre préhenseurs, l'invention s'applique également à un dispositif de préhension comprenant un nombre différent de préhenseurs comme par exemple deux préhenseurs, trois préhenseurs ou plus de quatre ;
- bien qu'ici le dispositif de préhension comprenne quatre préhenseurs dont les doigts sont reliés à un même bâti, l'invention s'applique également à un dispositif de préhension dont les bâtis des différents préhenseurs sont reliés rigidement ou articulés l'un sur l'autre ;
- bien qu'ici la première et la deuxième phalange soient reliées par une troisième phalange, l'invention s'applique également à un doigt comprenant un nombre différent de phalanges comme par exemple un doigt comprenant une première phalange directement reliée mécaniquement à une deuxième phalange, ou une première phalange reliée à la deuxième phalange par l'intermédiaire de plus d'une phalange, comme par exemple deux ou trois phalanges supplémentaires;
- bien qu'ici la deuxième phalange comprenne un premier ressort, l'invention s'applique également à d'autres types de premier organe de rappel du doigt vers la configuration d'ouverture comme par exemple un aimant, un contrepoids ou un élément élastique autre qu'un ressort comme par exemple un empilement de rondelles élastiques de type Belleville, un bloc élastomère voire un ressort à gaz ;
- bien qu'ici la troisième phalange comprenne un deuxième ressort, l'invention s'applique également à d'autres types de deuxième organe de rappel du doigt vers la configuration d'ouverture comme par exemple un aimant, un contrepoids ou un élément élastique autre qu'un ressort comme par exemple un empilement de rondelles élastiques de type Belleville, un bloc élastomère voire un ressort à gaz ;
- bien qu'ici la première phalange comprenne un troisième ressort, l'invention s'applique également à d'autres types de troisième organe de rappel de la phalange vers la configuration d'ouverture comme par exemple un aimant, un contrepoids ou un élément élastique autre qu'un ressort comme par exemple un empilement de rondelles élastiques de type Belleville, un bloc élastomère voire un ressort à gaz ;
- bien qu'ici les ressorts utilisés dans les deuxième et troisième phalanges soient des ressorts de traction installés suivant la diagonale du quadrilatère qui s'allonge pendant le mouvement du doigt dans le premier sens de fermeture, l'invention s'applique si les ressorts étaient des ressorts de compression installés suivant une deuxième diagonale du quadrilatère qui se raccourcit pendant le mouvement du doigt dans un premier sens de fermeture, ou si les ressorts sons des ressorts de torsion montés entre deux cotés adjacents d'un quadrilatère de façon à emmagasiner de l'énergie élastique pendant le mouvement du doigt dans un premier sens de fermeture ;
- bien qu'ici les organes de rappel dans les deuxième et troisième phalanges soient des ressorts de traction et que la configuration d'ouverture du préhenseur est définie par l'équilibre mécanique respectivement de la barre 21, la barre 32 et la phalange 10 au contact des butées 4, 5 et 6 sous l'action des dits organes de rappel et de l'actionneur 40, l'invention s'applique également à un préhenseur comprenant des organes de rappel à action bilatérale - traction et compression autour d'une position centrale d'action nulle - dans les deuxième et troisième phalanges, ne comprenant pas de butées 4, 5, 6, et où la configuration d'ouverture est définie par une longueur d'extension commandée de l'actionneur et les positions centrales des organes de rappels à action bilatérale
- bien qu'ici le doigt comprenne trois codeurs rotatifs de mesure des rotations des phalanges, l'invention s'applique également à un préhenseur comprenant un nombre différent de codeurs rotatifs comme par exemple deux codeurs pour trois articulations- et de manière plus générale un codeur de moins que le nombre de phalanges, la position angulaire de la dernière articulation pouvant être déduite à partir des données des autres codeurs et de la mesure de la position angulaire du moteur qui permet de calculer l'extension de la vis à billes ;
- bien qu'ici la ventouse soit positionnée sur la première phalange, l'invention s'applique également à d'autres implantations de la ventouse sur le doigt, comme par exemple une ventouse solidaire de la deuxième ou troisième phalange ;
- bien qu'ici le préhenseur comprenne une ventouse pneumatique, l'invention s'applique également à d'autres types d'éléments d'adhésion commandable comme par exemple une ventouse mécanique, magnétique, un organe adhésif par effet électrostatique, par adhérence sèche de type Van der Walls, ou un adhésif sensible à la pression similaire à ceux des notes repositionnables ;
- bien qu'ici le secteur angulaire mesure soixante degrés, l'inventions s'applique également à d'autres valeurs du secteur angulaire comme par exemple un secteur angulaire compris entre dix et quatre-vingt-dix degrés, préférentiellement compris entre vingt et soixante degrés ;
- bien qu'ici les doigts soient montés à rotation autour d'un axe vertical, l'invention s'applique également à d'autres orientations de l'axe de rotation du doigt relativement au bâti, comme par exemple une orientation quelconque et préférentiellement orthogonale et /ou sécante au premier axe ;
- bien qu'ici les doigts soient dotés d'un mouvement de rotation et d'un mouvement de translation par rapport au bâti, l'invention s'applique également si la liaison comprenait deux axes de rotations permettant aux doigts une rotation perpendiculaire à la paume et des mouvements d'adduction/abduction, ou toute autre architecture de déplacement des doigts par rapport à la paume
- bien qu'ici la troisième phalange possède une structure de type quadrilatère déformable, l'invention s'applique également à d'autres types de structures de transmission de déplacement comme par exemple un train d'engrenage ou un ensemble poulies/courroies ;
- bien qu'ici les préhenseurs aient été représentés montés sur le châssis selon des axes verticaux, l'invention s'applique à d'autres orientations des axes de rotation des préhenseurs, préférentiellement et notamment des axes sensiblement orthogonaux au premier axe O1 ;
- bien qu'ici, le dispositif de préhension comprenne un premier ensemble vis/écrou et un deuxième ensemble vis/écrou, l'invention s'applique également à d'autres types de premier dispositif d'actionnement tel qu'un dispositif comprenant deux actionneurs distincts pour chaque platine, des vérins hydrauliques ou électrique, un unique vérin et un renvoi par câble et poulie ;
- bien qu'ici le premier pignon coopère avec une courroie crantée, l'invention s'applique également à d'autres types de premier organe de transmission d'un effort d'entrainement comme par exemple une courroie lisse, plate ou non, une chaîne ou un train d'engrenage. Ceci est également valable pour toutes les courroies crantées de l'invention qui peuvent être avantageusement remplacées par des câbles, chaînes, courroies lisses ou train d'engrenages ;
- bien qu'ici les dispositifs d'actionnement comprennent un motoréducteur électrique, l'invention s'applique également à d'autres types d'actionneur comme par exemple un vérin électrique ou hydraulique, un moteur pas à pas ;
- bien qu'ici le premier motoréducteur soit solidaire de la première platine, l'invention s'applique également à un motoréducteur solidaire de la deuxième platine ;
- bien qu'ici les galets soient crantés pour renvoyer une courroie crantée, l'invention s'applique également à d'autres types de galets de renvoi comme par exemple des roues dentées dans le cas d'un élément de transmission qui serait une chaîne ;
- bien qu'ici, chaque platine comprenne un ensemble vis/écrou, l'invention s'applique également à d'autres types d'actionneur, y compris une transmission entre platine qui comprendrait un câble et une poulie de renvoi ;
- bien qu'ici la dispositif de préhension ait été décrit en relation avec des préhenseurs pourvus de doigts sous-actionnés selon l'invention, l'invention s'applique également à un dispositif de préhension mettant en oeuvre d'autres types de préhenseurs pourvus de doigts connus comme par exemple un préhenseur muni de doigts dont toutes les phalanges sont actionnées.

## Revendications

1. Préhenseur (1) comportant un bâti (2) et un doigt (3) actionné, le doigt (3) comprenant une première phalange distale (10) et une deuxième phalange proximale (20) qui est articulée sur le bâti (2) autour d'un premier axe (O1), la première phalange (10) et la deuxième phalange (20) étant reliées mécaniquement pour permettre une rotation de la première phalange (10) autour d'un deuxième axe (O2) sensiblement parallèle au premier axe (O1) de manière à ce que le doigt (3) puisse passer d'une configuration d'ouverture vers une configuration de serrage lorsque la première phalange (10) et/ou la deuxième phalange (20) effectue une rotation dans un premier sens (S1) relativement au bâti (2), **caractérisé en ce que** :
la deuxième phalange (20) comprend une première barre (21) comprenant une première extrémité (22) reliée à la première phalange (10) et une deuxième extrémité (23) montée à pivotement sur le bâti (2) autour du premier axe (O1), et
la deuxième phalange (20) comprend également un actionneur linéaire (40) comprenant une troisième extrémité (42) reliée à la première phalange (10) et une quatrième extrémité (43) montée à pivotement sur le bâti (2), la première barre (21) et l'actionneur linéaire (40) étant agencés pour former un premier quadrilatère déformable (24) dans lequel une distance séparant la troisième extrémité (42) de la quatrième extrémité (43) peut être modifiée.

2. Préhenseur (1) selon la revendication 1, dans lequel le doigt (3) comprend une troisième phalange (30) reliant la première phalange (10) et la deuxième phalange (20).

3. Préhenseur (1) selon la revendication 2, dans lequel la troisième phalange (30) comprend une deuxième barre (32) comprenant une cinquième extrémité (33) articulée sur la première phalange (10) et une sixième extrémité (34) articulée sur une première bielle (31), la troisième phalange (30) comprenant également une troisième barre (35) comprenant une septième extrémité (36) articulée sur la première phalange (10) et une huitième extrémité (37) articulée sur la première bielle (31), la première extrémité (22) et la troisième extrémité (42) étant articulée à la première bielle (31).

4. Préhenseur (1) selon la revendication 3, dans lequel un projeté orthogonal de la troisième extrémité (42) sur une droite (D1) reliant la première extrémité (22) et la huitième extrémité (37) appartient à un segment (Seg1) reliant la première extrémité (22) et la huitième extrémité (37).

5. Préhenseur (1) selon la revendication 4, dans lequel la première extrémité (22) est articulée sur la sixième extrémité (34).

6. Préhenseur (1) selon l'une quelconque des revendications précédentes, dans lequel la deuxième phalange (20) comprend un premier organe de rappel (25) du doigt (3) vers la configuration d'ouverture.

7. Préhenseur (1) selon la revendication 6, dans lequel le premier organe de rappel (25) comprend un élément élastique.

8. Préhenseur (1) selon l'une quelconque des revendications 2 à 7, dans lequel la troisième phalange (30) comprend un deuxième organe de rappel (39) du doigt (3) vers la configuration d'ouverture.

9. Préhenseur (1) selon l'une quelconque des revendications précédentes, comprenant une première butée (11) pour limiter une première course angulaire (C1) d'une première rotation de la première phalange (10) autour du deuxième axe (O2) dans un deuxième sens (S2) opposé au premier sens (S1).

10. Dispositif de préhension (100) comprenant un châssis (101) sur lequel est montée une pluralité de préhenseurs (110, 120, 130, 140) comprenant un premier préhenseur (110), un deuxième préhenseur (120) et un troisième préhenseur (130), le premier préhenseur (110), le deuxième préhenseur (120) et le troisième préhenseur (130) étant conformes à l'une quelconque des revendications précédentes.

11. Dispositif de préhension (100) selon la revendication 10, dans lequel le premier préhenseur (110) et le deuxième préhenseur (120) sont respectivement portés par une première platine (111) et une deuxième platine (121) montées à coulissement relativement au châssis (101) selon deux sens opposés d'une première direction, et dans lequel les mouvements de coulissement de la première platine (111) et de la deuxième platine (121) sont actionnés à l'aide d'un premier dispositif d'actionnement (106) pourvu d'un unique deuxième actionneur (102).

12. Dispositif de préhension (100) selon la revendication 11, dans lequel
le premier préhenseur (110) comprenant un premier doigt actionné (113), le deuxième préhenseur (120) comprenant un deuxième doigt actionné (123), le premier doigt actionné (113) est articulé relativement à la première platine (111) autour d'un cinquième axe (O5) et le deuxième doigt actionné (123) est articulé relativement à la deuxième platine (121) autour d'un sixième axe (O6), le cinquième axe (O5) et le sixième axe (O6) étant sensiblement orthogonaux au premier axe (O1), et dans lequel, une rotation du premier doigt (113) relativement à la première platine (111) autour du cinquième axe (O5) et une rotation du deuxième doigt (123) relativement à la deuxième platine (121) autour du sixième axe (O6) sont actionnées à l'aide d'un deuxième dispositif d'actionnement (170) pourvu d'un unique troisième actionneur (150).

13. Dispositif de préhension (100) selon la revendication 12, dans lequel le deuxième dispositif d'actionnement (170) est agencé de manière à ce qu'un mouvement de coulissement de la première platine (111) et/ou de la deuxième platine (121) soit découplé d'un mouvement de rotation du premier doigt actionné (113) et du deuxième doigt actionné (123) et réciproquement.

14. Dispositif de préhension (100) selon la revendication 12 ou 13, dans lequel le deuxième dispositif d'actionnement (170) est agencé pour que les mouvements de rotation du premier doigt (113) et du deuxième doigt (123) s'effectuent dans des sens de rotation opposés.

15. Dispositif de préhension (100) selon l'une quelconque des revendications 11 à 14, dans lequel la pluralité de préhenseurs comprend un quatrième préhenseur (140),
le troisième préhenseur (130) et le quatrième préhenseur (140) étant respectivement portés par une troisième platine (131) et une quatrième platine (141) montées à coulissement relativement au châssis (101) selon deux sens opposés d'une deuxième direction sensiblement parallèle à la première direction, les mouvements de coulissement de la troisième platine (131) et de la quatrième platine (141) étant actionnés à l'aide d'un troisième dispositif d'actionnement (206) pourvu d'un unique quatrième actionneur (202).

16. Dispositif de préhension (100) selon la revendication 15, dans lequel le troisième préhenseur (130) comprenant un troisième doigt actionné (133) et le quatrième préhenseur (140) comprenant un quatrième doigt actionné (143), le troisième doigt actionné (133) est articulé relativement à la troisième platine (131) autour d'un septième axe (O7) et le quatrième doigt actionné (143) est articulé relativement à la quatrième platine (141) autour d'un huitième axe (O8), le septième axe (O7) et le huitième axe (O8) étant sensiblement orthogonaux au premier axe (O1), et dans lequel une rotation du troisième doigt (133) relativement à la troisième platine (131) autour du septième axe (O7) et une rotation du quatrième doigt (143) relativement à la quatrième platine (141) autour du huitième axe (O8) sont actionnées à l'aide d'un quatrième dispositif d'actionnement (270) agencé pour que les mouvements de rotation du troisième doigt (133) et du quatrième doigt (143) s'effectuent dans des sens de rotation opposés.

17. Dispositif de préhension (100) selon la revendication 16, dans lequel le quatrième dispositif d'actionnement (270) est agencé de manière à ce qu'un mouvement de coulissement de la troisième platine (131) et/ou la quatrième platine (141) soit découplé d'un mouvement de rotation du troisième doigt actionné (133) et du quatrième doigt actionné (143) et réciproquement.

18. Dispositif de préhension (100) selon les revendications 12 et 16, comprenant un dispositif d'accouplement (290) du quatrième dispositif d'actionnement (270) avec le deuxième dispositif d'actionnement (170) agencé de manière à ce que le quatrième dispositif d'actionnement (270) soit entraîné par le troisième actionneur (150).

19. Dispositif de préhension (100) selon la revendication 18, dans lequel le dispositif d'accouplement (290) comprend un premier galet (291) monté à rotation sur la première platine (111) ou la deuxième platine (121) autour d'un neuvième axe (O9) et qui est entraîné par le deuxième dispositif d'actionnement (150), un deuxième galet (292) monté à rotation sur la troisième platine (131) ou la quatrième platine (141) autour d'un dixième axe (O10) et qui entraine le troisième dispositif d'actionnement (206), un dispositif de transmission de mouvement (299) transmettant une rotation du premier galet (291) au deuxième galet (292).

20. Dispositif de préhension (100) selon la revendication 19, dans lequel le dispositif d'accouplement (290) comprend un bras articulé (293) comprenant un premier segment de bras (294) et un deuxième segment de bras (295) articulés entre eux autour d'un onzième axe (O11), le premier segment de bras (294) étant articulé autour du neuvième axe (O9) et le deuxième segment de bras (295) étant articulé autour du dixième axe (O10), le bras articulé (293) comprenant un troisième galet de renvoi (296) d'un élément de transmission (296, 297)du dispositif de transmission (299).

## Patentansprüche

1. Greifer (1), der einen Rahmen (2) und einen betätigbaren Finger (3) aufweist, wobei der Finger (3) ein erstes distales Fingerglied (10) und ein zweites proximales Fingerglied (20) umfasst, das am Rahmen (2) um eine erste Achse (O1) angelenkt ist, wobei das erste Fingerglied (10) und das zweite Fingerglied (20) mechanisch verbunden sind, um eine Drehung des ersten Fingerglieds (10) um eine zweite Achse (O2), die im Wesentlichen parallel zur ersten Achse (O1) verläuft, derart zu ermöglichen, dass der Finger (3) von einer Öffnungskonfiguration in eine Klemmkonfiguration wechseln kann, wenn das erste Fingerglied (10) und/oder das zweite Fingerglied (20) eine Drehung in einer ersten Richtung (S1) relativ zum Rahmen (2) ausführt, **dadurch gekennzeichnet, dass**:
das zweite Fingerglied (20) eine erste Stange (21) umfasst, die ein erstes Ende (22), das mit dem ersten Fingerglied (10) verbunden ist, und ein zweites Ende (23) umfasst, das schwenkbar um die erste Achse (O1) am Rahmen (2) montiert ist, und
das zweite Fingerglied (20) ebenfalls einen linearen Aktuator (40) umfasst, der ein drittes Ende (42), das mit dem ersten Fingerglied (10) verbunden ist, und ein viertes Ende (43) umfasst, das schwenkbar am Rahmen (2) montiert ist, wobei die erste Stange (21) und der lineare Aktuator (40) so angeordnet sind, dass sie ein erstes verformbares Viereck (24) bilden, wobei ein Abstand, der das dritte Ende (42) vom vierten Ende (43) trennt, geändert werden kann.

2. Greifer (1) nach Anspruch 1, wobei der Finger (3) ein drittes Fingerglied (30) umfasst, das das erste Fingerglied (10) und das zweite Fingerglied (20) verbindet.

3. Greifer (1) nach Anspruch 2, wobei das dritte Fingerglied (30) eine zweite Stange (32) umfasst, die ein fünftes Ende (33), das am ersten Fingerglied (10) angelenkt ist, und ein sechstes Ende (34) umfasst, das an einer ersten Verbindungsstange (31) angelenkt ist, wobei das dritte Fingerglied (30) ebenfalls eine dritte Stange (35) umfasst, die ein siebtes Ende (36), das am ersten Fingerglied (10) angelenkt ist, und ein achtes Ende (37) umfasst, das an der ersten Verbindungsstange (31) angelenkt ist, wobei das erste Ende (22) und das dritte Ende (42) an der ersten Verbindungsstange (31) angelenkt sind.

4. Greifer (1) nach Anspruch 3, wobei eine orthogonale Projektion des dritten Endes (42) auf einer Linie (D1), die das erste Ende (22) und das achte Ende (37) verbindet, zu einem Segment (Seg1) gehört, das das erste Ende (22) und das achte Ende (37) verbindet.

5. Greifer (1) nach Anspruch 4, wobei das erste Ende (22) am sechsten Ende (34) angelenkt ist.

6. Greifer (1) nach einem der vorhergehenden Ansprüche, wobei das zweite Fingerglied (20) ein erstes Organ (25) zum Rückstellen des Fingers (3) in Richtung der Öffnungskonfiguration umfasst.

7. Greifer (1) nach Anspruch 6, wobei das erste Rückstellorgan (25) ein elastisches Element umfasst.

8. Greifer (1) nach einem der Ansprüche 2 bis 7, wobei das dritte Fingerglied (30) ein zweites Organ (39) zum Rückstellen des Fingers (3) in Richtung der Öffnungskonfiguration umfasst.

9. Greifer (1) nach einem der vorhergehenden Ansprüche, umfassend einen ersten Anschlag (11) zum Begrenzen eines ersten Winkelhubs (C1) einer ersten Drehung des ersten Fingerglieds (10) um die zweite Achse (O2) in eine zweite Richtung (S2), die der ersten Richtung (S1) entgegengesetzt ist.

10. Greifvorrichtung (100), die ein Gestell (101) umfasst, an dem eine Vielzahl von Greifern (110, 120, 130, 140) montiert ist, die einen ersten Greifer (110), einen zweiten Greifer (120) und einen dritten Greifer (130) umfassen, wobei der erste Greifer (110), der zweite Greifer (120) und der dritte Greifer (130) in Übereinstimmung mit einem der vorhergehenden Ansprüche sind.

11. Greifvorrichtung (100) nach Anspruch 10, wobei der erste Greifer (110) und der zweite Greifer (120) jeweils von einer ersten Platte (111) und einer zweiten Platte (121) getragen werden, die relativ zum Gestell (101) in zwei zu einer ersten Richtung entgegengesetzten Richtungen verschiebbar montiert sind, und wobei die Schiebebewegungen der ersten Platte (111) und der zweiten Platte (121) mit Hilfe einer ersten Betätigungsvorrichtung (106), die mit einem einzelnen zweiten Aktuator (102) ausgestattet ist, betätigt werden.

12. Greifvorrichtung (100) nach Anspruch 11, wobei
der erste Greifer (110) einen ersten betätigbaren Finger (113) umfasst, der zweite Greifer (120) einen zweiten betätigbaren Finger (123) umfasst, der erste betätigbare Finger (113) relativ zur ersten Platte (111) um eine fünfte Achse (O5) angelenkt ist und der zweite betätigbare Finger (123) relativ zur zweiten Platte (121) um eine sechste Achse (O6) angelenkt ist, wobei die fünfte Achse (O5) und die sechste Achse (O6) im Wesentlichen orthogonal zur ersten Achse (O1) sind, und wobei eine Drehung des ersten Fingers (113) relativ zur ersten Platte (111) um die fünfte Achse (O5) und eine Drehung des zweiten Fingers (123) relativ zur zweiten Platte (121) um die sechste Achse (O6) mit Hilfe einer zweiten Betätigungsvorrichtung (170), die mit einem einzelnen dritten Aktuator (150) ausgestattet ist, betätigt werden.

13. Greifvorrichtung (100) nach Anspruch 12, wobei die zweite Betätigungsvorrichtung (170) so angeordnet ist, dass eine Schiebebewegung der ersten Platte (111) und/oder der zweiten Platte (121) von einer Drehbewegung des ersten betätigbaren Fingers (113) und des zweiten betätigbaren Fingers (123) entkoppelt ist und umgekehrt.

14. Greifvorrichtung (100) nach Anspruch 12 oder 13, wobei die zweite Betätigungsvorrichtung (170) so angeordnet ist, dass die Drehbewegungen des ersten Fingers (113) und des zweiten Fingers (123) in entgegengesetzten Drehrichtungen ausgeführt werden.

15. Greifvorrichtung (100) nach einem der Ansprüche 11 bis 14, wobei die Vielzahl von Greifern einen vierten Greifer (140) umfasst,
wobei der dritte Greifer (130) und der vierte Greifer (140) jeweils von einer dritten Platte (131) und einer vierten Platte (141) getragen werden, die relativ zum Gestell (101) in zwei entgegengesetzten Richtungen einer zweiten Richtung, die im Wesentlichen parallel zur ersten Richtung verläuft, verschiebbar montiert sind, wobei die Schiebebewegungen der dritten Platte (131) und der vierten Platte (141) mit Hilfe einer dritten Betätigungsvorrichtung (206), die mit einem einzelnen vierten Aktuator (202) ausgestattet ist, betätigt werden.

16. Greifvorrichtung (100) nach Anspruch 15, wobei der dritte Greifer (130) einen dritten betätigbaren Finger (133) umfasst und der vierte Greifer (140) einen vierten betätigbaren Finger (143) umfasst, wobei der dritte betätigbare Finger (133) relativ zur dritten Platte (131) um eine siebte Achse (O7) angelenkt ist und der vierte betätigbare Finger (143) relativ zur vierten Platte (141) um eine achte Achse (O8) angelenkt ist, wobei die siebte Achse (O7) und die achte Achse (O8) im Wesentlichen orthogonal zur ersten Achse (O1) verlaufen, und wobei eine Drehung des dritten Fingers (133) relativ zur dritten Platte (131) um die siebte Achse (O7) und eine Drehung des vierten Fingers (143) relativ zur vierten Platte (141) um die achte Achse (O8) mit Hilfe einer vierten Betätigungsvorrichtung (270) betätigt werden, die so angeordnet ist, dass die Drehbewegungen des dritten Fingers (133) und des vierten Fingers (143) in entgegengesetzten Drehrichtungen ausgeführt werden.

17. Greifvorrichtung (100) nach Anspruch 16, wobei die vierte Betätigungsvorrichtung (270) derart angeordnet ist, dass eine Schiebebewegung der dritten Platte (131) und/oder der vierten Platte (141) von einer Drehbewegung des dritten betätigbaren Fingers (133) und des vierten betätigbaren Fingers (143) entkoppelt ist und umgekehrt.

18. Greifvorrichtung (100) nach den Ansprüchen 12 und 16, umfassend eine Vorrichtung zum Koppeln (290) der vierten Betätigungsvorrichtung (270) mit der zweiten Betätigungsvorrichtung (170), die derart angeordnet ist, dass die vierte Betätigungsvorrichtung (270) durch den dritten Aktuator (150) angetrieben wird.

19. Greifvorrichtung (100) nach Anspruch 18, wobei die Kopplungsvorrichtung (290) eine erste Rolle (291), die drehbar auf der ersten Platte (111) oder der zweiten Platte (121) um eine neunte Achse (O9) montiert ist und die durch die zweite Betätigungsvorrichtung (150) angetrieben wird, und eine zweite Rolle (292) umfasst, die drehbar auf der dritten Platte (131) oderdervierten Platte (141) um eine zehnte Achse (O10) montiert ist und die die dritte Betätigungsvorrichtung (206) antreibt, wobei eine Bewegungsübertragungsvorrichtung (299) eine Drehung von der ersten Rolle (291) auf die zweite Rolle (292) überträgt.

20. Greifvorrichtung (100) nach Anspruch 19, wobei die Kopplungsvorrichtung (290) einen Gelenkarm (293) umfasst, der ein erstes Armsegment (294) und ein zweites Armsegment (295) umfasst, die um eine elfte Achse (O11) aneinander angelenkt sind, wobei das erste Armsegment (294) um die neunte Achse (O9) angelenkt ist und das zweite Armsegment (295) um die zehnte Achse (O10) angelenkt ist, wobei der Gelenkarm (293) eine dritte Umlenkrolle (296) eines Übertragungselements (296, 297) der Übertragungsvorrichtung (299) umfasst.

## Claims

1. A gripper (1) including a frame (2) and an actuated finger (3), the finger (3) comprising a first distal phalanx (10) and a second proximal phalanx (20) which is articulated on the frame (2) about a first axis (O1), the first phalanx (10) and the second phalanx (20) being mechanically linked so as to enable a rotation of the first phalanx (10) about a second axis (O2) substantially parallel to the first axis (O1) so that the finger (3) could switch from an opening configuration into a clamping configuration when the first phalanx (10) and/or the second phalanx (20) performs a rotation in a first way (S1) relative to the frame (2), **characterised in that**:
the second phalanx (20) comprises a first bar (21) comprising a first end (22) linked to the first phalanx (10) and a second end (23) pivotally mounted on the frame (2) about the first axis (O1), and
the second phalanx (20) also comprises a linear actuator (40) comprising a third end (42) linked to the first phalanx (10) and a fourth end (43) pivotally mounted on the frame (2), the first bar (21) and the linear actuator (40) being arranged so as to form a first four-bar linkage (24) wherein a distance separating the third end (42) from the fourth end (43) can be modified.

2. The gripper (1) according to claim 1, wherein the finger (3) comprises a third phalanx (30) linking the first phalanx (10) and the second phalanx (20).

3. The gripper (1) according to claim 2, wherein the third phalanx (30) comprises a second bar (32) comprising a fifth end (33) articulated on the first phalanx (10) and a sixth end (34) articulated on a first connecting rod (31), the third phalanx (30) also comprising a third bar (35) comprising a seventh end (36) articulated on the first phalanx (10) and an eighth end (37) articulated on the first connecting rod (31), the first end (22) and the third end (42) being articulated with the first connecting rod (31).

4. The gripper (1) according to claim 3, wherein an orthogonal projection of the third end (42) on a line (D1) connecting the first end (22) and the eighth end (37) belongs to a section (seg1) connecting the first end (22) and the eighth end (37).

5. The gripper (1) according to claim 4, wherein the first end (22) is articulated on the sixth end (34).

6. The gripper (1) according to any one of the preceding claims, wherein the second phalanx (20) comprises a first means (25) for biasing the finger (3) towards the opening configuration.

7. The gripper (1) according to claim 6, wherein the first biasing member (25) comprises an elastic element.

8. The gripper (1) according to any one of claims 2 to 7, wherein the third phalanx (30) comprises a second biasing member (39) of the finger (3) towards the opening configuration.

9. The gripper (1) according to any one of the preceding claims, comprising a first stop (11) for limiting a first angular stroke (C1) of a first rotation of the first phalanx (10) about the second axis (O2) in a second way (S2) opposite to the first way (S1).

10. A gripping device (100) comprising a chassis (101) on which a plurality of grippers (110, 120, 130, 140) are mounted, the plurality of grippers (110, 120, 130, 140) comprising a first gripper (110), a second gripper (120) and a third gripper (130), said first gripper (110), second gripper (120) and third gripper (130) being in conformity with any of preceding claims.

11. The gripping device (100) according to claim 10, wherein the first gripper (110) and the second gripper (120) are respectively carried by a first plate (111) and a second plate (121) slidably mounted relative to the chassis (101) according to two opposite ways of a first direction, and wherein the sliding movements of the first plate (111) and of the second plate (121) are actuated using a first actuation device (106) provided with a unique second actuator (102).

12. The gripping device (100) according to one of claims 10 or 11, wherein
the first gripper (110) comprising a first actuated finger (113), the second gripper (120) comprising a second actuated finger (123), the first actuated finger (113) is articulated relative to the first plate (111) about a fifth axis (O5) and the second actuated finger (123) is articulated relative to the second plate (121) about a sixth axis (O6), the fifth axis (O5) and the sixth axis (O6) being substantially orthogonal to the first axis (O1), and wherein, a rotation of the first finger (113) relative to the first plate (111) about the fifth axis (O5) and a rotation of the second finger (123) relative to the second plate (121) about the sixth axis (O6) are actuated using a second actuation device (170) provided with a unique third actuator (150).

13. The gripping device (100) according to claim 12, wherein the second actuation device (170) is arranged so that a sliding movement of the first plate (111) and/or of the second plate (121) is decoupled from a rotational movement of the first actuated finger (113) and of the second actuated finger (123) and vice versa.

14. The gripping device (100) according to claim 12 or 13, wherein the second actuation device (170) is arranged so that the rotational movements of the first finger (113) and of the second finger (123) are performed in opposite rotational ways.

15. The gripping device (100) according to any one of claims 10 to 14, wherein the plurality of grippers comprises a fourth gripper (140),
the third gripper (130) and the fourth gripper (140) being respectively carried by a third plate (131) and a fourth plate (141) slidably mounted relative to the chassis (101) according to two opposite ways of a second direction, the sliding movements of the third plate (131) and of the fourth plate (141) being actuated using a third actuation device (206) provided with a unique fourth actuator (202).

16. The gripping device (100) according to claim 15, wherein the third gripper (130) comprising a third actuated finger (133) and the fourth gripper (140) comprising a fourth actuated finger (143), the third actuated finger (133) is articulated relative to the third plate (131) about a seventh axis (O7) and the fourth actuated finger (14) is articulated relative to the fourth plate (141) about an eighth axis (O8), the seventh axis (O7) and the eighth axis (O8) being substantially orthogonal to the first axis (O1), and wherein a rotation of the third finger (133) relative to the third plate (131) about the seventh axis (O7) and a rotation of the fourth finger (143) relative to the fourth plate (141) about the eighth axis (O8) are actuated using a fourth actuation device (270) arranged so that the rotational movements of the third finger (133) and of the fourth finger (143) being performed in opposite rotational ways.

17. The gripping device (100) according to claim 16, wherein the fourth actuation device (270) is arranged so that a sliding movement of the third plate (131) and/or the fourth plate (141) is decoupled from a rotational movement of the third actuated finger (133) and of the fourth actuated finger (143) and vice versa.

18. The gripping device (100) according to claims 12 and 16, comprising a device (290) for coupling the fourth actuation device (270) with the second actuation device (170) arranged so that the fourth actuation device (270) is driven by the third actuator (150).

19. The gripping device (100) according to claim 18, wherein the coupling device (290) comprises a first roller (291) rotatably mounted on the first plate (111) or the second plate (121) about a ninth axis (O9) and which is driven by the second actuation device (150), a second roller (292) rotatably mounted on the third plate (131) or the fourth plate (141) about a tenth axis (O10) and which drives the third actuation device (206), a movement transmission device (299) transmitting a rotation from the first roller (291) to the second roller (292).

20. The gripping device (100) according to claim 19, wherein the coupling device (290) comprises an articulated arm (293) comprising a first arm section (294) and a second arm section (295) articulated together about an eleventh axis (O11), the first arm section (294) being articulated about the ninth axis (O9) and the second arm section (295) being articulated about the tenth axis (O10), the articulated arm (293) comprising a third idler roller (296) of a transmission element (296, 297) of the transmission device (299).
